# FASCICULE DE BREVET EUROPEEN

(11) **EP 0 964 737 B1**
(45) Date de publication et mention de la délivrance du brevet: **28.07.2004**
(21) Numéro de dépôt: 98952807.0
(22) Date de dépôt: 28.10.1998
(51) Int. Cl.: B01D 63/02, B01D 63/08, B01D 67/00

(54) **MEMBRANES CREUSES A TUBES CAPILLAIRES, MODULES DE TRAITEMENT DE FLUIDE LES UTILISANT ET LEURS PROCEDES DE FABRICATION**
KAPILLARHOHLMEMBRANEN, DARAUS HERGESTELLTE FLUIDBEHANDLUNGSMODULEN UND VERFAHREN ZU IHRER HERSTELLUNG
HOLLOW MEMBRANES WITH CAPILLARY TUBES, MODULES FOR TREATING FLUID USING SAME AND METHODS FOR MAKING SAME

(30) Priorité: 29.10.1997 FR 9713567
(43) Date de publication de la demande: 22.12.1999
(73) Titulaire: COMMISSARIAT A L'ENERGIE ATOMIQUE, 75015 Paris (FR); Jitariouk, Nicolai, 75015 Paris (FR)
(72) Inventeur: JITARIOUK, Nicolai, F-75015 Paris (FR); LE MOEL, Alain, F-92370 Chaville (FR)
(74) Mandataire: Audier, Philippe André
(86) Numéro de dépôt international: PCT/FR1998/002310
(87) Numéro de publication internationale: WO 1999/021643

(56) Documents cités:
- EP-A- 0 000 687
- EP-A- 0 562 303
- WO-A-95/00238
- US-A- 4 959 152
- US-A- 5 104 535
- US-A- 5 232 593
- PATENT ABSTRACTS OF JAPAN vol. 12, no. 455, 29 novembre 1988 & JP 63 182007 A (DAICEL CHEM IND LTD), 27 juillet 1988

## Description

### Domaine technique

L'invention concerne des membranes creuses destinées au traitement de fluides (liquides et/ou gaz) en vue de séparer de ceux-ci un ou plusieurs composés par des phénomènes d'absorption, d'adsorption et/ou de transfert au travers d'une membrane réalisée en un matériau présentant des propriétés spécifique vis-à-vis du ou des fluides traités. Elle s'applique aussi au transfert de matière et/ou de chaleur entre deux fluides séparés par ladite membrane.

L'invention concerne également des modules de traitement de fluides comportant de telles membranes. Ces modules peuvent être utilisés dans divers domaines, par exemple, pour le lavage des gaz acides pour la préparation des gaz de synthèse, pour lutter contre la pollution de l'environnement en purifiant les gaz de four ou en traitant les effluents aqueux.

L'invention s'applique également aux procédés biologiques comme la fermentation, la fabrication de protéines, les procédés d'oxydations biologiques, ainsi que les appareils médicaux tels que les oxygénateurs sanguins et les reins artificiels.

### Etat de la technique antérieure

Les membranes utilisées jusqu'à présent pour le traitement de fluides sont, soit des membranes planes, soit des membranes en forme de fibres creuses.

Pour ces dernières, on a étudié en particulier, les possibilités de les réaliser sous forme de fibres creuses de longueur et de diamètre faibles comme il est décrit dans le document 1 : WO-A-95/00238. Une limitation de la longueur des fibres creuses permet en particulier de limiter la chute de pression du fluide circulant dans celles-ci, comme c'est le cas dans les membranes capillaires naturelles telles que le poumon humain. En effet, dans ces systèmes naturels, les capillaires qui fournissent le sang ont un diamètre interne aussi faible que 7 µm, mais ils ont une faible résistance à l'écoulement en raison de leur longueur extrêmement faible d'environ 100 µm. C'est la raison pour laquelle les systèmes naturels sont si efficaces pour le transfert de masse.

Le document 1 illustre un panneau de membrane à fibres creuses auto-supportées comprenant deux couches de base en matériau textile encapsulé dans un matériau non perméable, et une multiplicité de fibres creuses de matériau perméable s'étendant entre les deux couches précitées. Ainsi, dans cette membrane à fibres creuses, les couches-supports n'ont aucune propriété particulière vis-à-vis du fluide à traiter puisqu'elles sont en matériau non-perméable.

Le document 2 : US-A-4 959 152 décrit un assemblage de fibres creuses comportant une pluralité de disques empilés dans lesquels les fibres creuses sont disposées horizontalement pour faire circuler un fluide en parallèle dans tous les disques. Ces fibres sont plus courtes que dans les dispositifs classiques, mais elles ont encore une longueur importante par rapport à la dimension rencontrée dans les systèmes naturels tels que le poumon humain.

Le document 3 : US-A-5 104 535 décrit un assemblage de fibres creuses montées entre deux supports d'extrémités et assemblées les unes au-dessus des autres pour former des modules qui sont disposés côte à côte dans une enceinte de traitement. Comme dans le document précédent, les fibres creuses ont encore des longueurs importantes par rapport à ce que l'on trouve dans les systèmes naturels servant pour le transfert de matière.

Avec les techniques décrites ci-dessus, on doit faire face aux problèmes suivants. En raison de l'épaisseur importante des membranes en forme de fibres creuses, il existe toujours une nécessité de rendre hydrophobe la surface des pores desdites membranes en utilisant pour cela des méthodes assez complexes qui de plus ne sont pas d'une fiabilité suffisante. Afin d'éviter le passage d'un liquide, contenant le composé à transférer, à travers les pores desdites membranes, il faut toujours effectuer une régulation précise de la pression différentielle sur les deux côtés desdites membranes. En utilisant des membranes en forme de fibres creuses ayant une longueur de l'ordre d'un mètre et un rapport de la longueur au diamètre intérieur de l'ordre de 2000, on obtient une différence de pression à l'entrée et à la sortie desdites fibres qui est trop importante. Si l'on essaye de diminuer l'épaisseur de la membrane en forme de fibres creuses, on réduit la fiabilité du dispositif car la probabilité de rupture desdites membranes augmente ; de plus l'absence de rigidité des fibres creuses fait que ces fibres ont tendance à se coller les unes aux autres sous l'action des flux de fluides en altérant ainsi les conditions hydrodynamiques d'écoulement des fluides.

Dans les systèmes capillaires naturels comme un poumon, un intestin et un rein, il existe une vaste quantité de capillaires plus au moins courts sur la surface servant pour un transfert de matière. Il s'agit d'alvéoles dans les poumons ou épithélium, de villosités et de microvillosités dans les intestins, et, enfin, de capillaires glomérulaires dans le rein qui comprennent des capillaires fins avec un rapport de leur longueur à leur diamètre compris entre environ 10 et environ 30. Au nombre d'environ 5×10⁸, les alvéoles pulmonaires représentent une surface d'environ 200 m². Groupés en petites grappes, les alvéoles sont formées de cellules à paroi très mince. Le transfert des gaz (oxygène et dioxyde de carbone) est effectué au niveau des parois de ces cellules alvéolaires. La masse de sang qui passe en 24 heures dans les poumons est évaluée à 10 m³.

Grâce aux microvillosités se trouvant sur la surface extérieure de la paroi des cellules biologiques constituant un épithélium intestinal, la surface géométrique d'absorption de chacune de ces cellules augmente à quelques centaines de fois. Ces villosités intestinales réalisent des mouvements continuels de va-et-vient dans la bouillie liquide résultant de la digestion : le passage des aliments digérés dans le sang et la lymphe s'en trouve favorisé grâce à la turbulence du milieu liquide. Dans le cas des poumons, on observe un système de capillaires dont le diamètre diminue en continu le long de la trajectoire de l'air aspiré de la trachée vers les alvéoles, la quantité de capillaires augmentant dans le même sens. C'est pourquoi les systèmes capillaires naturels sont si efficaces pour le transfert de matière d'un milieu environnant vers le sang, à travers les parois de capillaires, formés par voie biologique.

Un transfert de matière dans des capillaires de petit diamètre a lieu en régime laminaire d'écoulement du fluide. Afin d'intensifier la procédure de transfert dans ces conditions spécifiques, il faut avoir des capillaires courts de petit diamètre ainsi qu'une distance intercapillaire faible, d'une part, et des capillaires à paroi fine, d'autre part. En utilisant dans ce but des fibres creuses, l'étape de transfert de matière dans un système gaz-liquide est limitée par la vitesse de diffusion dans la phase liquide, et la vitesse totale du processus de transfert est proportionnelle à la surface totale de la membrane en dépit de la porosité de la membrane (ou de la paroi des fibres creuses).

En utilisant des fibres creuses, ayant les caractéristiques décrites ci-dessus, on fait une distinction entre les deux régimes de fonctionnement de la membrane : la membrane mouillée et la membrane non-mouillée. L'obtention de l'un ou l'autre régime dépend de la pression utilisée et de l'interaction entre la membrane et le liquide. La résistance d'une membrane, dont les pores sont remplis par une phase liquide (régime mouillé), est beaucoup plus élevée que celle de la membrane dont les pores sont remplis par une phase gazeuse.

La présente invention propose de résoudre les problèmes évoqués ci-dessus au moyen d'une membrane creuse à tubes capillaires dont la structure est beaucoup plus proche de celle des systèmes biologiques naturels.

### Exposé de l'invention

Dans ce but, l'invention propose une membrane creuse comprenant deux couches-supports disposées l'une au-dessus de l'autre en ménageant entre elles un espace et une pluralité de tubes capillaires disposés entre les deux couches-supports et présentant chacun une ouverture au niveau de chacune des deux couches-supports de façon à former des canaux capillaires d'écoulement d'un premier fluide, l'espace entre les tubes capillaires et les deux couches-supports formant une cavité interne de circulation d'un second fluide autour des tubes capillaires, et les deux couches-supports et les tubes capillaires étant constitués d'un polymère organique, ladite membrane comportant de 10⁵ à 5.10⁸ tubes capillaires par cm² de couche-support et présentant une surface spécifique de transfert de 10² à 10⁴ m² par litre de fluide.

Cette structure particulière de la membrane creuse de l'invention présente de nombreux avantages. En effet, les capillaires formés entre les deux couches supports peuvent posséder les caractéristiques suivantes :
- une longueur très faible, par exemple de 1 à 1000 micromètres (µm), de préférence de 3 à 200 µm et mieux encore de 5 à 60 µm,
- un diamètre interne très faible, par exemple de 0,02 à 50 µm, de préférence de 0,1 à 10 µm, et
- une épaisseur de paroi très faible, par exemple de 0,01 à 10 µm, de préférence de 0,1 à 3 µm.

On dispose ainsi d'une structure présentant des caractéristiques proches de celles des systèmes naturels tels que le poumon, le rein et l'intestin.

De plus, la membrane creuse de l'invention présente non seulement une surface d'échange au niveau des tubes capillaires mais également au niveau des deux couches-supports qui sont réalisées dans le même matériau que les tubes capillaires.

Selon l'invention, la membrane creuse est réalisée de préférence en polymère organique susceptible d'être obtenu par oxydation chimique ou électrochimique d'un monomère précurseur.

De tels polymères peuvent être en particulier des polymères hétérocycliques ou du polyacétylène. A titre d'exemple de polymères hétérocycliques, on peut citer les polypyrroles, les polyanilines et les polythiophènes.

On précise que l'on entend par « polypyrrole » les polymères obtenus non seulement à partir du pyrrole mais également à partir de dérivés du pyrrole. Il en est de même pour les polyanilines et polythiophènes.

Dans la membrane creuse de l'invention, les tubes capillaires sont de préférence disposés sensiblement perpendiculairement aux deux couches-supports et/ou selon des directions faisant des angles d'au plus 45° avec la perpendiculaire aux deux couches-supports.

La membrane creuse de l'invention peut être utilisée pour transférer un composé d'un premier fluide amené sous pression dans les tubes capillaires de la membrane creuse vers un autre fluide circulant dans la cavité interne de la membrane creuse. Ainsi, les deux fluides qui participent dans le processus de transfert du composé considéré sont séparés dans la membrane creuse par une couche de séparation comprenant les parois des tubes capillaires, d'une part, et les deux couches-supports, d'autre part.

La présente invention a également pour objet un procédé de fabrication d'une membrane creuse présentant les caractéristiques données ci-dessus.

Ce procédé comprend les étapes suivantes :
a) former sur les surfaces externes et dans les pores d'une membrane-matrice comportant des pores rectilignes ouverts disposés entre ses deux surfaces externes, un revêtement de polymère organique par polymérisation in situ d'un monomère précurseur du polymère, et
b) éliminer ensuite le matériau formant la membrane-matrice par destruction dans un réactif sélectif qui n'affecte pas le polymère pour former la cavité interne de ladite membrane creuse.

Dans ce procédé, on part d'une membrane-matrice comportant des pores rectilignes ayant des dimensions légèrement supérieures à celles des tubes capillaires à réaliser et une épaisseur telle qu'elle correspond à la longueur des capillaires à réaliser.

Cette membrane-matrice peut être en matériau polymère ou en matériau inorganique. De préférence, les pores rectilignes ont été créés dans cette membrane-matrice par irradiation au moyen de faisceaux d'ions lourds suivie par une dissolution de la matière dans les traces formées par les ions et/ou autour d'elles. Une technique de ce type est décrite dans les documents suivants :

Flerov G.N. Synthèse des éléments superlourds et application des méthodes de physiques nucléaire dans les domaines voisins. Vestnik de l'académie des sciences de l'URSS, 1984, n°4, p. 35-48 (en Russe).

Apel, P. Yu, Kuznetsow, V.I., Zhitariuk, N.I. & Orelovich, O.L. (1985) Nuclear ultrafilters. Colloid Journal of the USSR, 47, 1-5 (en anglais).

Les matériaux polymères susceptibles d'être utilisés peuvent être par exemple des polycarbonates, du polytéréphtalate d'éthylène, des polyimides ou du polyfluorure de vinylidène. Avec de tels matériaux polymères, on peut utiliser comme réactif sélectif dans l'étape b) du procédé, des bases et des acides inorganiques ou encore du permanganate de potassium dans le cas du polyfluorure de vinylidène.

Les matériaux inorganiques susceptibles d'être utilisés pour former la membrane-matrice peuvent être par exemple l'oxyde d'aluminium ou le mica. Dans le cas de l'oxyde d'aluminium, le réactif utilisé dans l'étape b) peut être une base inorganique ou un acide inorganique. Dans le cas du mica, on utilise de préférence comme réactif dans cette étape b) l'acide fluorhydrique.

Des membranes-matrices utilisables dans l'invention ayant une épaisseur de 1 à 1000 µm, de préférence de 3 à 200 µm et mieux encore de 5 à 60 µm, un diamètre de pore de 0,02 à 50 µm, de préférence de 0,1 à 10 µm et une densité de pores de 10⁴ à 8.10⁹/cm², de préférence de 10⁵ à 5.10⁸ cm⁻² sont commercialisées par les sociétés suivantes : Costar, Millipore, Osmonics (Etats-Unis d'Amérique), Whatman (Belgique, Angleterre) et Centre de Physique Appliquée de l'Institut Uni des Recherches Nucléaires (Russie).

Des membranes minérales utilisables comme membrane-matrice sont commercialisées sous la marque Anopore® par la société Whatman et elles présentent un diamètre de pore de 0,1 à 0,2 µm, une épaisseur d'environ 60 µm et une porosité de 40 à 60%.

Selon l'invention, on dépose sur ces membranes-matrices un revêtement de polymère organique non seulement sur les surfaces externes de la membrane-matrice, mais également dans les pores de cette membrane, par polymérisation in situ d'un monomère précurseur du polymère.

Cette polymérisation peut être effectuée par voie chimique ou électrochimique et s'applique aux monomères précurseurs choisis dans le groupe comprenant les composés hétérocycliques suivants : le pyrrole, l'aniline, le thiophène et leurs dérivés, ainsi que l'acétylène. La polymérisation du monomère précurseur peut être initiée dans une phase aqueuse ou organique utilisant des solvants polaires comme l'acétonitrile et le carbonate de propylène ou un mélange d'un solvant organique (alcool, par exemple) et de l'eau, par un agent oxydant choisi dans le groupe comprenant les sels ferriques (Fe³⁺), les periodates, perbromates ou perchlorates de tetraalkylammonium ou d'autres cations, et les sels contenant l'anion persulfate. La polymérisation est effectuée, de préférence, en mettant en contact une face de la membrane-matrice avec une solution du monomère précurseur et l'autre face de la membrane avec la solution de l'agent oxydant.

Afin d'obtenir une couche de polymère, c'est-à-dire une couche de séparation, ayant différentes tailles de pores, différents taux de mouillage par les solutions aqueuses ou les solvants organiques, et/ou différentes propriétés d'électroconductivité, de solidité, de porosité et de flexibilité, on peut :
a) ajouter dans la solution, contenant déjà l'agent oxydant, un dopant choisi, en général, parmi les acides de Lewis, de préférence, parmi les composés ayant un anion du type (R-SO₃⁻) où R est un groupe alkyle, aryle, ou alkylaryle, tels que les acides alkylbenzènesulfoniques, alkyltoluènesulfoniques ou les sels desdits acides ;
b) réaliser une copolymérisation en greffant sur ladite couche de séparation des composés non-saturés choisis dans le groupe comprenant l'acide acrylique, la vinylpyrrolidone, la vinylpyridine, l'acrylamide et leurs dérivés ;
c) traiter ladite couche de séparation dans un plasma ou au moyen de radiations provenant d'un laser excimère avec ou sans injection des molécules organiques (benzène et leur dérivés, alcènes) ; ou
d) traiter ledit polymère par des alcalis minéraux tels que les hydroxydes ou carbonates de métaux alcalins comme l'hydroxyde de sodium ou de potassium.

Les processus de dopage ou de dédopage décrits ci-dessus peuvent conduire à un changement de la taille des pores dans la couche de polymère déposé, c'est-à-dire dans la couche de séparation. En faisant le dopage de cette couche, de préférence, durant la polymérisation, on arrive à une couche de séparation dépourvue de tout pore. En réalisant ensuite le dédopage de la couche de séparation par traitement dans des milieux basiques, on enlève les ions (molécules) de dopant de ladite couche et on les remplace par un autre dopant ayant une taille moins importante. La tailles desdits pores dépend de la taille des ions (molécules) de dopants retirés : plus ils sont gros, plus les pores de la couche de séparation sont grands.

Les traitements évoqués ci-dessus peuvent être effectués lors de la polymérisation du monomère précurseur, ou comme traitement complémentaire après formation de la couche de polymère.

L'épaisseur de la couche de polymère déposée sur les surfaces et dans les pores de la membrane-matrice dépend des conditions de polymérisation, de la concentration des réactifs dans les solutions de polymérisation et de la durée de polymérisation. On opère généralement à une température de -35°C à +30°C. Généralement l'épaisseur de la couche de polymère déposée est plus importante sur les surfaces de la membrane que sur les parois des pores rectilignes, soit des tubes capillaires. Pour effectuer ensuite l'étape b) de destruction du matériau formant la membrane-matrice, il suffit de pratiquer une ouverture dans la couche de polymère déposée et d'y faire pénétrer un réactif capable de détruire le matériau formant la membrane-matrice en laissant intacte la couche de polymère déposée.

Après cette opération, on peut si nécessaire soumettre la couche de polymère aux traitements de dopage ou dédopage évoqués ci-dessus.

L'invention a encore pour objet un module de traitement de fluide comprenant au moins une membrane creuse telle que définie ci-dessus disposée dans une enceinte étanche de façon à ménager entre deux membranes creuses adjacentes et entre chaque membrane creuse et une paroi adjacente de l'enceinte des espaces de circulation d'un premier fluide en communication uniquement avec l'intérieur des tubes capillaires de la (des) membrane(s) creuse(s), des moyens pour mettre en circulation ledit premier fluide dans les tubes capillaires des membranes creuses en l'introduisant dans l'un desdits espaces de circulation et en le recueillant dans un autre desdits espaces de circulation, et des moyens pour mettre en circulation au moins un second fluide dans la (les) cavité(s) interne(s) de la (des) membrane(s) creuse(s).

De préférence dans ce module, les espaces de circulation dudit premier fluide sont remplis d'un garnissage permettant d'engendrer des turbulences dans le premier fluide.

Ce garnissage peut être formé en particulier d'une matière poreuse dont les pores ont des dimensions plus grandes que le diamètre des tubes capillaires.

A titre d'exemple, on peut réaliser ces espaces de circulation dudit premier fluide sous la forme de plaques poreuses ayant, par exemple une dimension de pore de 0,1 à 200 µm, de préférence de 5 à 150 µm, et une épaisseur de 10 à 1000 µm, de préférence de 20 à 200 µm. Les dimensions de pores de cette matière poreuse sont de préférence telles que le rapport de la dimension de pore au diamètre des tubes capillaire est de 5 à 200, de préférence de 10 à 200 et mieux encore de 10 à 50.

Dans le module de l'invention, ces éléments poreux qui sont disposés de part et d'autre de la (des) membrane(s) creuse(s) sont destinés à distribuer le fluide vers les tubes capillaires de la (des) membrane(s) creuse(s) et à engendrer des turbulences dans ledit fluide en formant, grâce à une hausse du nombre de Reynolds, des tourbillons hydrauliques dans celui-ci. Ceci permet d'intensifier le transfert de matière et/ou de chaleur dans le fluide avant son entrée dans les tubes capillaires de la membrane creuse.

Pour améliorer les séparations effectuées dans la membrane creuse, on peut aussi remplir partiellement les pores de la matière poreuse au moyen d'un composé choisi parmi les catalyseurs, les enzymes et les sorbants insolubles dans ledit premier fluide de façon à effectuer des réactions catalytiques ou autres dans le premier fluide avant son entrée dans les tubes capillaires de la membrane creuse. Une telle réaction peut être effectuée, par exemple pour retenir un composé et/ou des particules fines du premier fluide avant son traitement dans les tubes capillaires. On peut aussi utiliser une réaction catalytique pour obtenir un composé séparé ensuite dans les tubes capillaires.

Bien entendu, le tapissage des pores est réalisé de façon telle que le rapport de la dimension de pore de la matière poreuse au diamètre interne des tubes capillaires reste dans la gamme de 10 à 50, et la taille des particules de catalyseur ou de sorbant doit être plus importante que le diamètre intérieur des tubes capillaires.

Selon l'invention, on peut assembler plusieurs membranes creuses de façon à former un empilement permettant la mise en contact à travers les parois des capillaires du fluide à traiter, soit du premier fluide, avec un second et éventuellement un troisième fluides.

Selon un premier mode de réalisation de cet assemblage, le module comprend :
- un empilement de n membranes creuses et de (n + 1) plaques de matière poreuse alternées avec les membranes creuses de façon que chaque membrane creuse soit disposée entre deux plaques de matière poreuse, ces plaques formant les espaces de circulation du premier fluide,
- des moyens pour introduire le premier fluide sur la face inférieure ou supérieure de l'empilement et le récupérer sur la face opposée de cet empilement,
- une chambre d'introduction du second fluide disposée sur une face latérale de l'empilement et en communication avec les cavités internes des membranes creuses, et
- une chambre de réception du second fluide disposée sur la face latérale opposée de l'empilement et en communication avec les cavités internes desdites membranes creuses.

Selon un second mode de réalisation de cet assemblage, le module comprend :
- un empilement de n membranes creuses et de (n + 1) plaques de matière poreuse alternées avec les membranes creuses de façon que chaque membrane creuse soit disposée entre deux plaques de matière poreuse, ces plaques formant les espaces de circulation du premier fluide, l'empilement comprenant une première série de membranes creuses de numéro impair et une seconde série de membranes creuses de numéro pair disposées entre les membranes de numéro impair,
- des moyens pour introduire le premier fluide sur la face inférieure ou supérieure de l'empilement et le récupérer sur la face opposée de cet empilement,
- une chambre d'introduction d'un second fluide disposée sur une première face latérale de l'empilement et en communication avec les cavités internes des membranes creuses de la première série,
- une chambre de réception du second fluide disposée sur la face latérale opposée à ladite première face et en communication avec les cavités internes des membranes creuses de la première série,
- une chambre d'introduction d'un troisième fluide disposée sur la face latérale, dite seconde face latérale, contigue à ladite première face latérale en communication avec les cavités internes des membranes creuses de la seconde série, et
- une chambre de réception du troisième fluide disposée sur la face latérale opposée à ladite seconde face et en communication avec les cavités internes des membranes creuses de la seconde série.

Selon un troisième mode de réalisation de cet assemblage, le module comprend :
- un empilement de n membranes creuses et de (n + 1) plaques de matière poreuse alternées avec les membranes creuses de façon que chaque membrane creuse soit disposée entre deux plaques de matière poreuse, ces plaques formant les espaces de circulation du premier fluide, l'empilement comprenant une première série de membranes creuses de numéro impair et une seconde série de membranes creuses de numéro pair disposées entre les membranes de numéro impair,
- des moyens pour introduire le premier fluide sur la face inférieure ou supérieure de l'empilement et le récupérer sur la face opposée de cet empilement,
- une chambre d'introduction d'un second fluide disposée sur une première face latérale de l'empilement et en communication avec les cavités internes des membranes creuses de la première série,
- une chambre de réception du second fluide disposée sur une face latérale de l'empilement, dite seconde face, contiguë à ladite première face et en communication avec les cavités internes des membranes creuses de la première série,
- une chambre d'introduction d'un troisième fluide disposé sur une autre face latérale de l'empilement, dite troisième face, et en communication avec les cavités internes des membranes creuses de la seconde série, et
- une chambre de réception du troisième fluide disposée sur la dernière face latérale de l'empilement, dite quatrième face latérale, ladite chambre étant en communication avec les cavités internes des membranes creuses de la seconde série.

De préférence, dans ces trois modes de réalisation de l'assemblage, l'empilement est disposé entre deux grilles rigides dont les ouvertures sont au moins égales ou plus importantes que la dimension de pore des plaques de matière poreuse. Par ailleurs, dans ces assemblages, on peut utiliser des membranes creuses dont l'une au moins a des caractéristiques différentes en ce qui concerne le diamètre, la longueur et/ou la quantité de tubes capillaires, pour obtenir des effets particuliers.

De préférence, le diamètre des tubes capillaires diminue d'une membrane creuse à l'autre dans le sens de l'écoulement du premier fluide alors que la quantité de tubes capillaires par unité de surface des membranes creuses augmente d'une membrane creuse à l'autre dans le sens d'écoulement du premier fluide.

Cette disposition permet d'avoir un module présentant des caractéristiques plus proches de celles des systèmes capillaires naturels.

Les modules décrits ci-dessus peuvent être préparés par un procédé comprenant les étapes suivantes :
1) préparer au moins une membrane composite en formant sur les surfaces externes et dans les pores d'une membrane-matrice comportant des pores rectilignes ouverts disposés entre ses deux surfaces externes, un revêtement de polymère organique par polymérisation in situ d'un monomère précurseur du polymère,
2) former à partir de la (des) membranes-composites et de plaques de matière poreuse un empilement dans lequel chaque membrane-composite est disposée entre deux plaques de matière poreuse,
3) former des joints étanches entre les membranes composites et les plaques poreuses sur les faces latérales de l'empilement,
4) réaliser des ouvertures dans le joint étanche seulement au niveau des membranes composites, et pour chaque membrane composite seulement sur deux faces latérales différentes de l'empilement,
5) introduire par ces ouvertures un réactif capable de détruire le matériau formant la membrane-matrice des membranes composites sans affecter le polymère recouvrant les surfaces et les pores de la membrane-matrice, pour obtenir un empilement de membranes creuses et de plaques de matière poreuse dans lequel les cavités internes des membranes creuses sont accessibles sur deux faces latérales de l'empilement.

D'autres caractéristiques et avantages de l'invention apparaîtront mieux à la lecture de la description qui suit en référence, donné bien entendu à titre illustratif et non limitatif en référence aux dessins annexés.

### Brève description des dessins

La figure 1 est une vue en coupe verticale d'une membrane-matrice utilisée pour la fabrication de la membrane creuse de l'invention.
La figure 2 illustre en coupe verticale, une membrane composite obtenue à partir de la membrane-matrice de la figure 1.
La figure 3 illustre en coupe verticale une membrane creuse obtenue à partir de la membrane composite de la figure 2.
La figure 4 représente de façon schématique en coupe verticale un module de traitement de fluide conforme au premier mode de réalisation de l'invention.
Les figures 5 à 9 illustrent les étapes de fabrication d'un module de traitement de fluide conforme à l'invention.
La figure 10 illustre en perspective un module de traitement de fluide conforme au second mode de réalisation de l'invention.
La figure 11 est une vue en perspective d'un module de traitement de fluide conforme au troisième mode de réalisation du module de l'invention.

### Exposé détaillé des modes de réalisation

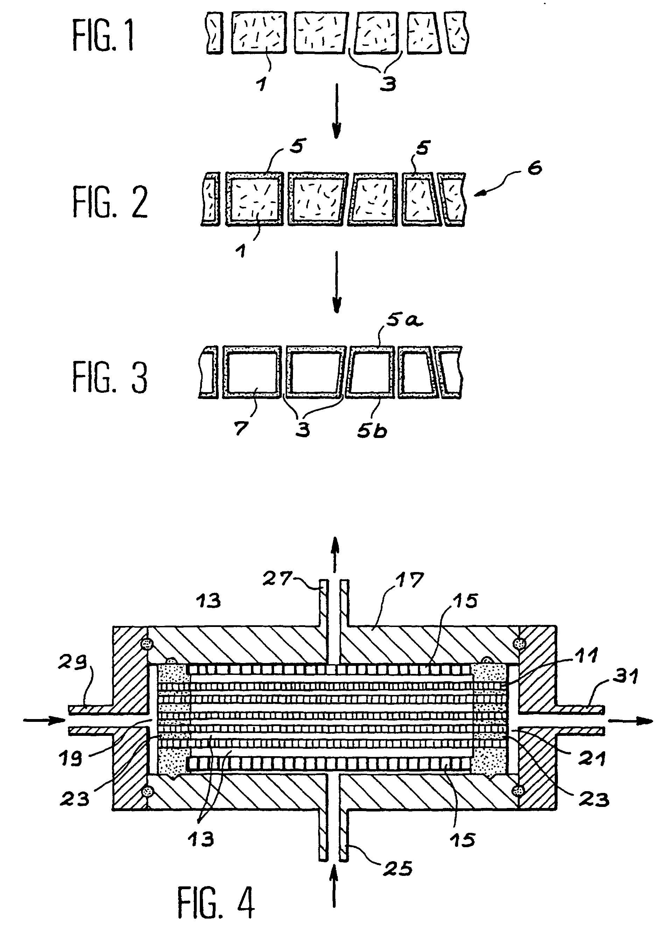

En se reportant aux figures 1 à 3, on va décrire la fabrication d'une membrane creuse conforme à l'invention.

Pour la fabrication de cette membrane creuse, on part de la membrane-matrice 1 représentée en coupe verticale sur la figure 1 qui peut être réalisée en matériau polymère ou en matériau inorganique. Celle-ci comporte des pores rectilignes qui sont droits ou légèrement inclinés et traversent totalement la membrane-matrice 1. Ces pores peuvent être obtenus par l'action d'un faisceau d'ions lourds sur une membrane plane, ils peuvent être orientés perpendiculairement aux deux surfaces de la membrane ou faire un angle allant jusqu'à 45° par rapport à la direction perpendiculaire à la surface de la membrane 1.

Sur la figure 2, on a illustré la membrane composite 6 obtenue après avoir revêtu de polymère organique les deux surfaces externes de la membrane-matrice 1 ainsi que l'intérieur de ses pores 3. Sur cette figure, on voit la membrane-matrice 1 revêtue de la couche de polymère 5. Après avoir formé la membrane composite de la figure 2, on dissout le matériau qui formait la membrane-matrice de départ pour obtenir une membrane creuse constituée uniquement du polymère organique. Dans ce but, on rend accessible l'intérieur de la membrane en pratiquant une ouverture sur les côtés et on l'immerge dans un solvant approprié capable de dissoudre le matériau formant la matrice sans dissoudre le polymère organique. On obtient ainsi la membrane creuse représentée sur la figure 3, qui comporte deux couches-supports (5a et 5b) en polymère et des tubes capillaires 3 également en polymère disposés entre ces deux couches-supports. L'espace entre les tubes capillaires forme une cavité interne 7 de circulation d'un second fluide autour des tubes capillaires.

Sur la figure 4, on a représenté le premier mode de réalisation d'un module de traitement de fluide conforme à l'invention.

Ce module est formé d'un empilement de n membranes creuses 11 qui sont au nombre de 5 sur cette figure, et de (n+1) plaques poreuses 13 alternées avec les membranes creuses 11 de façon que chaque membrane creuse 11 soit disposée entre deux plaques poreuses 13. L'empilement est supporté par deux grilles 15 disposées de part et d'autre de l'empilement. L'ensemble est introduit dans une enceinte étanche 17 en ménageant sur deux faces latérales opposées de l'enceinte une chambre 19 d'introduction d'un second fluide et une chambre 21 de réception de ce second fluide. Ces chambres sont en communication uniquement avec les cavités internes des membranes creuses 11, des joints 23 étant interposés au niveau de chaque plaque poreuse 13. Le fluide à traiter est introduit à la base de l'empilement par la conduite 25 et il ressort au sommet de l'empilement par la conduite 27, après avoir circulé dans les plaques poreuses 13 puis dans les canaux capillaires des membranes creuses 11 où il est en contact par l'intermédiaire des parois des capillaires avec le second fluide introduit par la conduite 29 et récupéré par la conduite 31.

Bien entendu, on pourrait utiliser ce dispositif en introduisant le premier fluide dans la conduite 27 et en le récupérant par la conduite 25.

Bien que sur ce dessin, on ait représenté plusieurs membranes creuses 11, on pourrait réaliser un module de traitement de fluide ne comportant qu'une seule membrane entourée de deux espaces de circulation 13 du fluide à traiter remplis éventuellement d'une matière poreuse.

En utilisant, ce mode de réalisation du module l'invention, on peut transférer un composé à partir du premier fluide ou fluide à traiter, dans le second fluide ou l'inverse. Le second fluide pourrait bien évidemment constituer le fluide à traiter.

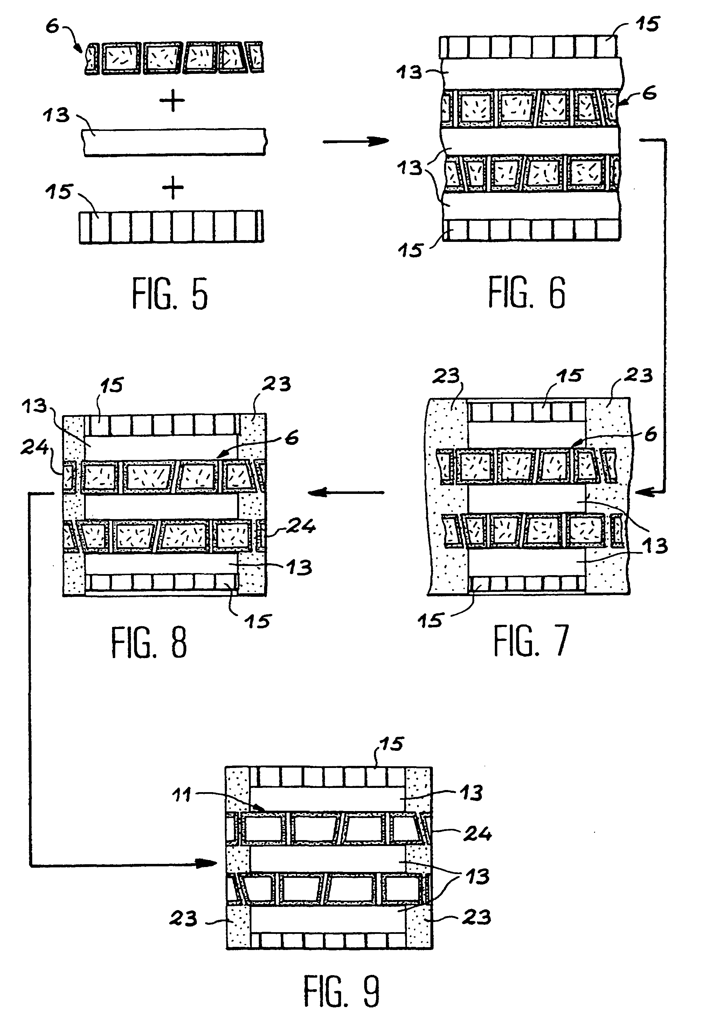

On peut réaliser l'empilement représenté dans le module de la figure 4 en mettant en oeuvre les étapes de procédé décrites en relation avec les figures 5 à 9.

Dans ce cas, on part de membranes-matrices identiques à celles représentées sur la figure 1, et on forme sur celles-ci un revêtement de polymère pour obtenir une membrane composite 6 conforme à la figure 2. Comme représenté sur la figure 5, on assemble ensuite ces membranes composites 6 avec des plaques poreuses 13 et des grilles d'extrémité 15 pour former l'empilement de la figure 6 où seules deux membranes composites ont été représentées. Comme on peut le voir sur la figure 7, on rend ensuite l'assemblage étanche sur ces parois latérales en formant un joint 23 pour rendre inaccessible les plaques poreuses 13 et les membranes composites 6. Ceci peut être effectué en trempant chaque face latérale dans une colle ou en réalisant sur la périphérie de l'assemblage une fusion partielle des plaques poreuses 13. On obtient ainsi l'assemblage représenté sur la figure 7, qui comprend sur toute sa périphérie un joint étanche 23.

Pour mieux assurer la pénétration de la colle dans les plaques poreuses, on peut soumettre celles-ci, avant l'assemblage, à un traitement pour les hydrophiliser par exemple. Ce traitement peut consister en :
- une oxydation chimique par des solutions contenant du peroxyde d'hydrogène, de l'acide sulfurique avec du bichromate de potasium, ou un perchlorate ;
- une oxydation en phase gazeuse par de l'ozone, du fluor ou un plasma ; ou
- un greffage de monomères hydrophiles.

Ce traitement peut n'être réalisé que sur un ou certains éléments de l'empilement. La colle doit aussi pénétrer dans les canaux capillaires des membranes composites sur la profondeur dudit joint.

Pour terminer cet assemblage, on rend accessible le matériau-matrice des membranes composites 6 en formant des ouvertures dans le joint 23 au niveau des membranes composites 6 mais seulement sur deux faces latérales opposées de l'assemblage. On obtient ainsi l'assemblage semi-ouvert représenté sur la figure 8 qui comprend des ouvertures 24 au niveau de chaque membrane composite 6 alors que les plaques poreuses 13 sont toujours munies du joint étanche 23. On procède alors à l'élimination du matériau formant la matrice des membranes composites 6 en introduisant dans l'assemblage un réactif capable de détruire ce matériau sans affecter le polymère. Ce réactif peut être introduit par les ouvertures 24 pratiquées précédemment et l'on obtient ainsi l'assemblage représenté sur la figure 9 dans lequel les membranes composites 6 ont été transformées en membranes creuses 11 alors que les plaques poreuses 13 restent inchangées, les cavités internes des membranes creuses 11 étant accessibles par les ouvertures 24 pratiquées précédemment.

Par mise en place de l'assemblage de la figure 9 dans l'enceinte étanche 17 représentée sur la figure 4, on obtient le module représenté sur la figure 4.

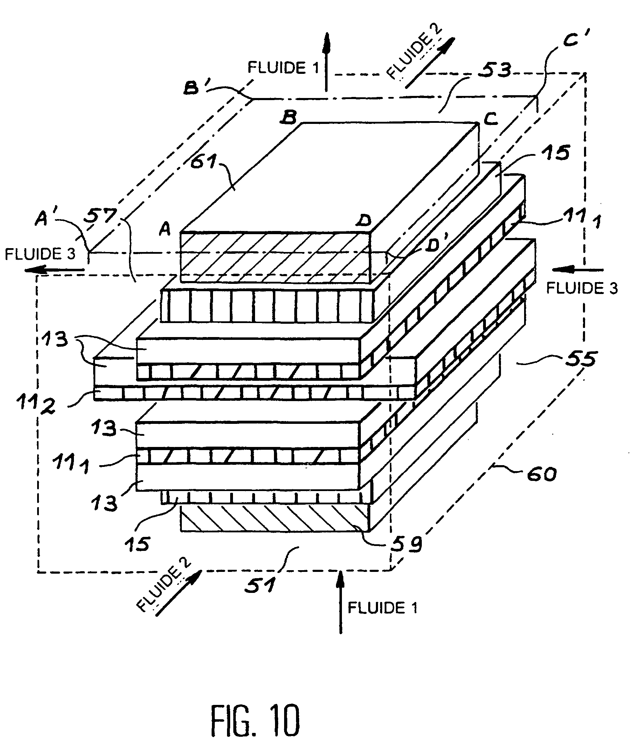

Sur la figure 10, on a représenté un module de traitement de fluide conforme au second mode de réalisation de l'invention. Sur cette figure, on a repris les mêmes références que sur la figure 4 pour représenter les éléments communs aux deux modules.

Dans ce second mode de réalisation, le module comprend un empilement de n membranes creuses 11 (n = 3 dans cet exemple), et de (n + 1) plaques de matière poreuse 13 (4 dans cet exemple) qui sont alternées avec les membranes creuses de façon à ce que chaque membrane creuse 11 soit disposée entre deux plaques poreuses 13. Dans cet empilement, les membranes creuses de numéro impair ou membranes de la première série, sont répertoriées 11₁ alors que la membrane creuse de numéro pair ou membrane de la seconde série est répertoriée 11₂.

Dans cet empilement, les dimensions des membranes creuses et des plaques de matière poreuse ainsi que leur disposition sont telles que l'on délimite dans l'enceinte :
- une chambre frontale 51 d'introduction d'un second fluide qui se trouve uniquement en communication avec les cavités internes des membranes creuses de numéro impair 11₁ de la première série,
- une chambre de réception 53 de ce second fluide sur la face opposée, soit la face arrière, également en communication uniquement avec les cavités internes des membranes creuses 11₁ de numéro impair de la première série,
- sur la face latérale droite de l'empilement une chambre d'introduction 55 d'un troisième fluide, celle-ci étant en communication uniquement avec la cavité interne de la membrane creuse de numéro pair 11₂ de la seconde série, et
- sur la face latérale opposée du module, une chambre de réception 57 du troisième fluide également en communication uniquement avec la cavité interne de la membrane creuse 11₂ de la seconde série.

Le fluide à traiter peut être introduit, comme dans le module de la figure 4, à la base de l'empilement par le conduit 59 et être récupéré au sommet de celui-ci dans le conduit 61, après avoir circulé dans les plaques de matière poreuse 13 et dans les tubes capillaires de toutes les membranes creuses 11₁ et 11₂.

Dans la disposition représentée sur la figure 10, les membranes creuses et les plaques de matière poreuse qui leur sont associées, ont une section rectangulaire et elles sont disposées les unes au-dessus des autres de façon que la longueur de la section des membranes creuses de numéro impair 11₁ soit dans une direction et que la longueur de la section des membranes creuses de numéro pair 11₂ soit disposée à angle droit par rapport à celle de la section des membranes creuses de numéro impair. Les plaques poreuses sont disposées de la même façon en associant deux plaques poreuses à la première membrane creuse située à la base de l'empilement.

Cet assemblage est disposé dans une enceinte étanche conçue pour isoler les unes des autres les chambres 51, 53, 55 et 57 et les conduits 59 et 61 d'alimentation et de réception des différents fluides. Sur les côtés de l'assemblage, des joints étanches ont par ailleurs été formés pour que seul soit possible l'accès à la cavité interne de la membrane creuse de numéro pair 11₂ dans les chambres 55 et 57, et l'accès aux cavités internes des membranes creuses de numéro impair 11₁ dans les chambres 51 et 53. Des joints d'étanchéité sont également disposés à la base et au sommet de l'empilement pour assurer une circulation du premier fluide sans possibilité de communication avec les chambres 51, 53, 55 et 57, celles-ci étant également isolées entre elles.

Un tel module peut être réalisé selon le même procédé que celui décrit précédemment pour le module de la figure 4, en relation avec les figures 5 à 9. Dans ce cas, après avoir rendu étanche l'empilement de plaques et de membranes creuses sur ces quatre faces latérales par immersion dans de la colle, on a réalisé les découpes de façon à former des ouvertures uniquement dans les membranes creuses de numéro pair ou dans les membranes creuses de numéro impair selon leur disposition.

Sur la figure 10, on a représenté en tirets le joint de colle 60 réalisé initialement sur les quatre faces latérales de l'empilement. Ce joint de colle pénètre jusqu'au périmètre ABCD représenté sur la figure 10, qui délimite la zone utile de l'empilement pour le passage du premier fluide.

Après formation de ce joint de colle, on a découpé les faces latérales de l'empilement correspondant aux chambres 51 et 53 suivant les lignes de découpe en traits mixtes A'D' et B'C'. De cette façon, on a découpé uniquement les ensembles constitués par les membranes 11₁ et les plaques poreuses 13 qui leur sont associées puisque ces ensembles se trouvaient initialement en saillie par rapport à ces lignes de découpe. En revanche, cette découpe n'a pas atteint la membrane 11₂ et la plaque poreuse qui lui est associée, car celles-ci se trouvent en retrait par rapport à ces lignes de découpe. De cette façon, on rend accessible les cavités internes (qui seront formées après la destruction du matériau constituant la membrane-matrice) des membranes 11₁ dans les chambres 51 et 53 en conservant l'étanchéité de la cavité interne de la membrane 11₂.

De même, on a découpé les faces latérales de l'empilement correspondant aux chambres 55 et 57 suivant les lignes de découpe en traits mixtes D'C' et A'B' pour découper uniquement l'ensemble formé par la membrane 11₂ et la plaque poreuse qui lui est associée, sans toucher aux ensembles constitués par les membranes 11₁ et les plaques poreuses qui leur sont associées, puisque celles-ci se trouvent en retrait par rapport aux lignes de découpe. On a ainsi rendu accessible la cavité interne (qui sera formée après la destruction du matériau constituant la membrane-matrice) de la membrane 11₂ au fluide circulant de la chambre 55 à la chambre 57.

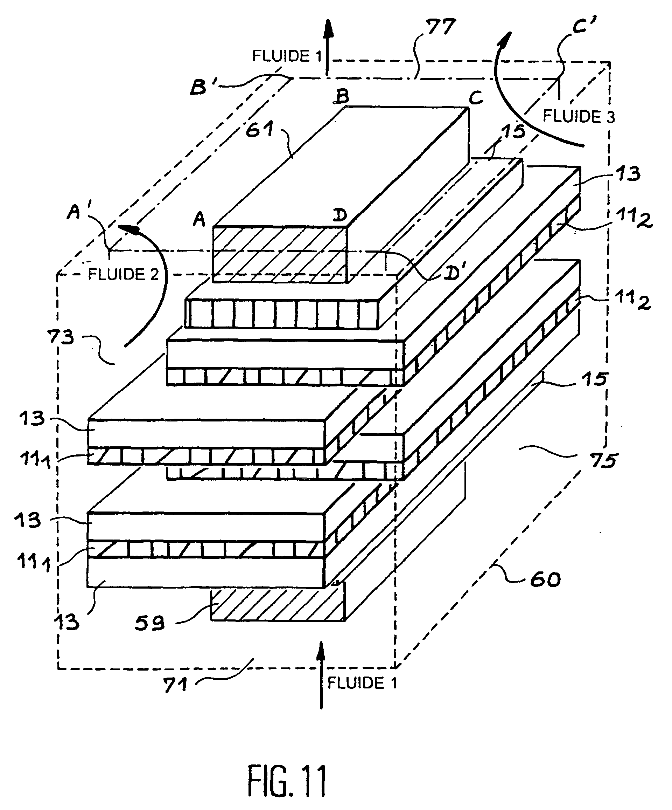

Sur la figure 11, on a représenté en perspective un module de traitement de fluide conforme au troisième mode de réalisation de l'invention.

Sur cette figure, on a repris également les mêmes références pour désigner les plaques de matière poreuse 13, les membranes creuses de numéro pair 11₂ et de numéro impair 11₁, et les grilles 15.

Comme on peut le voir sur la figure 11, l'empilement comprend quatre membranes creuses 11 qui sont réparties en deux membranes creuses de la première série 11₁ et deux membranes creuses de la seconde série 11₂, et cinq plaques de matière poreuse 13 qui sont alternées avec les membranes creuses comme sur la figure 10.

Dans cet empilement, les dimensions des membranes creuses et des plaques de matière poreuse ainsi que leur disposition sont telles que l'on délimite dans l'enceinte :
- une chambre frontale 71 d'introduction d'un second fluide qui se trouve uniquement en communication avec la cavité interne des membranes creuses de numéro impair 11, de la première série,
- une chambre de réception 73 de ce second fluide situé sur la face latérale contiguë de l'empilement, qui se trouve en communication également avec les cavités internes des membranes creuses 11₁ de la première série sur leurs faces latérales ;
- une chambre d'introduction 75 d'un troisième fluide, située sur la face latérale opposée à la chambre de réception 73, qui est en communication uniquement avec les cavités internes des membranes creuses 11₂ de la seconde série ; et
- sur la dernière face de l'assemblage, une chambre de réception 77 du troisième fluide, également en communication uniquement avec les cavités internes des membranes creuses 11₂ de la seconde série.

Le fluide à traiter peut être introduit comme dans le module de la figure 10 par le conduit 59 situé à la base de l'empilement et récupéré à sa sortie par le conduit 61 au sommet de l'empilement, après avoir circulé dans les plaques de matière poreuse 13 et dans les tubes capillaires de toutes les membranes creuses 11₁ et 11₂.

Dans la disposition représentée sur la figure 11, les membranes creuses 11 et les plaques de matière poreuse 13 qui leur sont associées, ont une section rectangulaire ou carrée, et sont disposées les unes au-dessus des autres en étant décalées à la fois dans le sens de la longueur et dans le sens de la largeur du rectangle, de sorte que les membranes creuses de numéro pair 11₂ sont en saillie dans les chambres 75 et 77 d'introduction et de réception du troisième fluide alors que les membranes creuses 11₁ de la première série sont en saillie dans les chambres d'introduction et de réception 71 et 73 du second fluide.

Sur les faces latérales de l'assemblage, des joints étanches ont été formés pour que seul soit possible l'accès aux cavités internes (qui seront formées après la destruction du matériau constituant la membrane-matrice) des membranes creuses 11₁ de la première série sur leur face frontale dans la chambre 71 et sur leur face latérale contiguë dans la chambre 73, et que l'accès aux cavités internes (qui seront formées après la destruction du matériau constituant la membrane-matrice) des membranes creuses 11₂ soit possible sur leur face latérale dans la chambre 75 et sur leur face latérale contiguë dans la chambre de réception 77 du second fluide. Des joints d'étanchéité sont également disposés à la base et au sommet de l'empilement pour assurer une circulation du premier fluide sans possibilité de communication avec les chambres 71, 73, 75 et 77.

Un tel module peut être réalisé selon le même procédé que celui décrit précédemment pour le module de la figure 10 en réalisant un joint de colle sur les quatre faces de l'empilement de façon telle que la colle pénètre jusqu'au périmètre ABCD qui délimite la zone utile de l'empilement pour le passage du premier fluide.

Après cette opération, il convient de découper les faces latérales au niveau des ensembles (membranes-plaques poreuses associées) de numéro pair ou impair pour rendre accessibles les cavités internes des membranes creuses de la première série 11₁ dans les chambres 71 et 73 et les cavités internes des membranes creuses de la seconde série 11₂ dans les chambres 75 et 77 tout en maintenant l'étanchéité des plaques poreuses qui leur sont associées.

Ceci peut être effectué comme précédemment en partant du joint de colle 60 représenté en tirets sur la figure 11 qui pénètre jusqu'au périmètre ABCD. Après formation de ce joint de colle, on a découpé les faces latérales de l'empilement correspondant aux chambres 71 et 73 selon les lignes de découpe en traits mixtes : A' D' et A'B' de façon à découper uniquement les ensembles formés par les membranes 11₁ et les plaques poreuses qui leur sont associées, sans toucher aux ensembles formés par les membranes 11₂ et les plaques poreuses qui leur sont associées, puisque ceux-ci sont en retrait par rapport aux lignes de découpe. Comme précédemment, on rend ainsi accessible les cavités internes des membranes 11₁ aux chambres 71 et 73 en maintenant l'étanchéité des cavités internes des membranes 11₂.

On découpe ensuite les faces latérales de l'empilement correspondant aux chambres 75 et 77 en suivant les lignes de découpe C'D' et B'C' en traits mixtes qui permettent d'atteindre uniquement les ensembles formés par les membranes 11₂ et les plaques poreuses qui leur sont associées, sans toucher aux ensembles formés par les membranes 11₁ et les plaques poreuses qui leur sont associées. De la sorte, on rend accessible les cavités internes des membranes 11₂ au fluide circulant dans les chambres 75 et 77.

On introduit ensuite l'ensemble dans une enceinte étanche conçue de façon à isoler les conduits 59, 61 et les chambres 71, 73, 75 et 77 les uns des autres.

Les modules représentés sur les figures 10 et 11 utilisant le fluide à traiter et deux fluides de traitement peuvent être utilisés par exemple pour extraire dans le second fluide un composé du premier fluide à traiter, et pour ajouter ensuite au premier fluide un autre composé par échange avec le troisième fluide.

Ainsi, dans le cas d'un premier fluide comprenant de la carboxyhémoglobine, on pourrait extraire le groupe carboxy dans le second fluide, par exemple au moyen d'une amine, puis transformer l'hémoglobine en oxyhémoglobine au moyen du troisième fluide, par exemple l'oxygène.

Les modules de traitement de fluide de la présente invention peuvent être utilisés comme appareil membranaire de transfert de matière entre un gaz et un liquide, entre deux gaz ou entre deux liquides séparés par les parois des membranes creuses. Ils peuvent être appliqués au traitement des fumées grâce à la stabilité thermique élevée des polymères hétérocycliques, au traitement de déchets liquides en aval des prétraitements utilisés pour retenir les matières en suspension, à la séparation des composants des solutions et des suspensions obtenues dans les procédés microbiologiques.

Le modules de l'invention peuvent aussi s'appliquer comme rein ou poumon artificiel. En utilisant des capillaires de diamètre interne d'environ 10 micromètres le dispositif peut être utilisé comme un oxygènateur sanguin artificiel. Ils peuvent être utiles aussi pour des procédés thermiques de séparation (pervaporation, degazéification thermo-membranaire de l'eau et des solutions à traiter) où il existe simultanément un transfert de matière et de chaleur.

Les modules selon la présente invention peuvent aussi être appliqués comme un réacteur membranaire. Selon le premier mode de réalisation, le dispositif peut être utilisé comme un réacteur membranaire ayant une seule couche de séparation qui est constituée des parois des capillaires. Pour la réaction du type : A + B → C, cette couche de séparation servira pour la séparation d'un produit C de réactifs A et B qui réagissent entre eux sans ou en présence d'un catalyseur. Dans les second et troisième modes de réalisation, ils peuvent être utilisés comme réacteur à deux membranes. Pour une réaction du type (la réaction peut être aussi catalytique) : A + B → C + D, ces dispositifs servent pour la séparation sélectives de deux produits différents C et D de la réaction, et des réactifs A et B. Lesdits catalyseurs peuvent être insérés dans les pores des plaques poreuses ou peuvent constituer une partie des plaques poreuses. Dans le cas général, les particules de catalyseur utilisées doivent être plus grosses que le diamètre interne des capillaires de la membrane creuse.

Ils peuvent aussi servir comme extracteur pour un transfert sélectif des ions et/ou de composés du premier fluide vers le troisième fluide par l'intermédiaire du second fluide. Dans ce cas, le second fluide contient un extractant sélectif pour le composé à éliminer, par exemple une amine, un éther-couronne, etc.

Les exemples qui suivent illustrent la réalisation d'une membrane creuse, d'une membrane composite et d'un module de traitement de fluide conformes à l'invention.

### Exemple 1 : Préparation d'une membrane creuse.

Cette membrane est préparée conformément au procédé décrit en relation avec les figures 1 à 3.

On part d'une membrane-matrice de polytéréphtalate d'éthylène (PTPE) de 20 µm d'épaisseur comprenant des pores approximativement cylindriques inclinés cahotiquement par rapport à la perpendiculaire aux surfaces frontales de la membranes. Ces pores ont été formés par irradiation de la membrane au moyen de faisceaux d'ions lourds et ils ont une taille d'environ 0,3 µm, leur inclinaison par rapport à la perpendiculaire aux surfaces de la membrane va de 0 à 45°.

On forme ensuite sur cette membrane-matrice et dans ses pores un revêtement de polypyrrole pour obtenir la membrane composite représentée sur la figure 2. On dépose ce revêtement de polypyrrole par polymérisation du pyrrole par voie chimique, en utilisant comme agent oxydant une solution de chlorure ferrique FeCl₃. Pour effectuer ce revêtement, on utilise la membrane comme diaphragme séparant :
1) une solution aqueuse de pyrrole récemment distillé, dont la concentration en pyrrole est de 0,1 mol/l et qui contient de plus 0,36 mol/l d'acide toluène-sulfonique-4 comme dopant, et
2) une solution aqueuse de chlorure ferrique à 0,3 mol/l.

On opère à la température ambiante et on réalise la polymérisation pendant une durée de 20 min.

On mesure le poids de la membrane avant et après polymérisation et on calcule le gain de poids exprimé en pourcentage. Le gain pour l'échantillon obtenu est de 24,9 %. On polit l'échantillon ainsi obtenu avec un papier à poncer (numéro 600 ou plus fin) pour enlever les agglomérats de polypyrrole se trouvant sur les couches superficielles de polypyrrole couvrant les surfaces frontales de la membrane. Souvent il ne faut polir que la surface qui était en contact avec la solution de FeCl₃. Le gain de poids de l'échantillon après le polissage est égal à 23,1 %.

On traite l'échantillon ainsi obtenu à l'aide d'une solution d'hydroxyde de sodium ayant une concentration de 3 mole/1 à une température, de préférence inférieure à 35°C, pendant environ 48 heures, pour dissoudre le matériau PTPE de la membrane-matrice. On change ensuite graduellement la solution de NaOH par de l'eau distillée en ajoutant cette dernière en quantité égale à la solution de NaOH. Dans ce but, on retire la moitié de la solution et on ajoute la même quantité d'eau en diminuant ainsi progressivement la concentration de NaOH. On réalise un lavage 4 fois pendant une demi-heure et la cinquième fois on retire toute la solution et on ajoute de l'eau distillée en maintenant l'échantillon obtenu dans celle-ci pendant 2 heures. Après cette dernière opération de lavage, on peut sécher l'échantillon. La perte de poids de l'échantillon ainsi obtenu par rapport à l'échantillon contenant le polypyrrole et PTPE est égale à 82 %, ce qui signifie que tout le PTPE a été enlevé de l'espace intercapillaire.

On obtient ainsi une membrane creuse en polypyrrole telle que représentée sur la figure 3, qui comprend plusieurs canaux capillaire 3 ayant un diamètre interne de 0,15 µm et un diamètre externe de 0,3 µm, soit une épaisseur de paroi de 0,08 µm, et deux couches-supports 5a et 5b en polypyrrole ayant une épaisseur d'environ 0,2 µm.

Cette membrane creuse comprend ainsi des canaux capillaires 3 de circulation d'un premier fluide et une cavité interne 7 pour la circulation d'un second fluide dans l'espace entre les capillaires. Les contacts entre les deux fluides sont possibles non seulement à l'intérieur des canaux capillaires mais également sur les couches-supports 5a et 5b.

### Exemple 2 : Préparation d'une membrane composite.

Dans cet exemple, on suit le même mode opératoire que dans l'exemple 1 pour préparer une membrane composite, mais on part d'une membrane-matrice en polycarbonate de 10 µm d'épaisseur ayant des pores approximativement cylindriques de 1,0 µm de diamètre. On forme la membrane composite en déposant sur cette membrane-matrice une couche de polypyrrole par polymérisation par voie chimique comme dans l'exemple 1, en utilisant une durée de polymérisation de 30 minutes. On obtient un gain de poids de 17 %.

On obtient ainsi la membrane composite représentée sur la figure 2, qui comprend des canaux capillaires de diamètre interne de 0,5 µm, ayant une épaisseur de paroi d'environ 0,3 µm, et une couche support en polypyrrole sur les faces supérieures et inférieure de la membrane composite d'environ 0,5 µm d'épaisseur.

### Exemple 3 : Réalisation d'un module de traitement de fluide

Dans cet exemple, on réalise un module conforme au premier mode de réalisation de l'invention tel que représenté sur la figure 4, en utilisant le procédé décrit en relation avec les figures 5 à 9.

Dans ce but, on empile des membranes composites telles que celles préparées dans les exemples 1 et 2 en intercalant entre elles des plaques de matière poreuse en polypropylène du type AN (Société Millipore) ayant une dimension moyenne de pore d'environ 10 µm et une épaisseur d'environ 200 µm.

On utilise dans cet empilement les membranes composites obtenues dans les exemples 1 et 2 et on les range dans l'ordre suivant à partir du bas : plaque poreuse AN/membrane composite obtenue dans l'exemple 1 dont les canaux capillaires ont un diamètre interne de 0,15 µm/plaque poreuse AN/membrane composite de l'exemple 2 dont les canaux capillaires ont un diamètre interne de 0,5 µm/plaque poreuse AN. On dispose l'ensemble entre deux grilles en polypropylène, ayant une ouverture de maille de 0,2 mm.

On procède ensuite à l'étanchéification de l'empilement sur ces faces latérales en les plongeant chacune dans une colle du type araldite de façon à immerger chaque face sur une épaisseur de 4 mm. Après durcissement de la colle, on découpe une couche de 2 mm d'épaisseur sur deux faces latérales opposées de l'empilement, puis on procède à l'élimination du matériau formant la matrice par immersion de l'ensemble dans une solution d'hydroxyde de sodium à 3 mol/l pendant 50 heures à la température ambiante. On réalise ensuite un lavage comme dans l'exemple 1 en remplaçant graduellement la solution d'hydoxyde de sodium par de l'eau.

On obtient ainsi un module conforme à celui représenté sur la figure 4, dans lequel on peut introduire et faire circuler un premier fluide dans les canaux capillaires des membranes creuses en l'introduisant à la base du module et en l'extrayant au sommet de celui-ci, et un deuxième fluide dans les cavités internes des membranes creuses pour le mettre en contact à l'intérieur des membranes creuses avec le premier fluide.

La présence des plaques de matière poreuse permet au premier fluide de subir quelques turbulences qui favorisent ainsi la vitesse de transfert des composés présents dans le fluide vers une couche séparatrice formée par les parois des capillaires et des couches-supports des membranes creuses.

Dans le tableau 1 annexé, on a reporté les caractéristiques des membranes creuses obtenues selon l'invention, ainsi que celles de membranes à fibres creuses de l'art antérieur et celles des systèmes naturels formées par le poumon humain, le rein et l'intestin.

Au vu de ce tableau, on remarque que les membranes creuses de l'invention sont plus proches des systèmes naturels que celles de l'art antérieur.

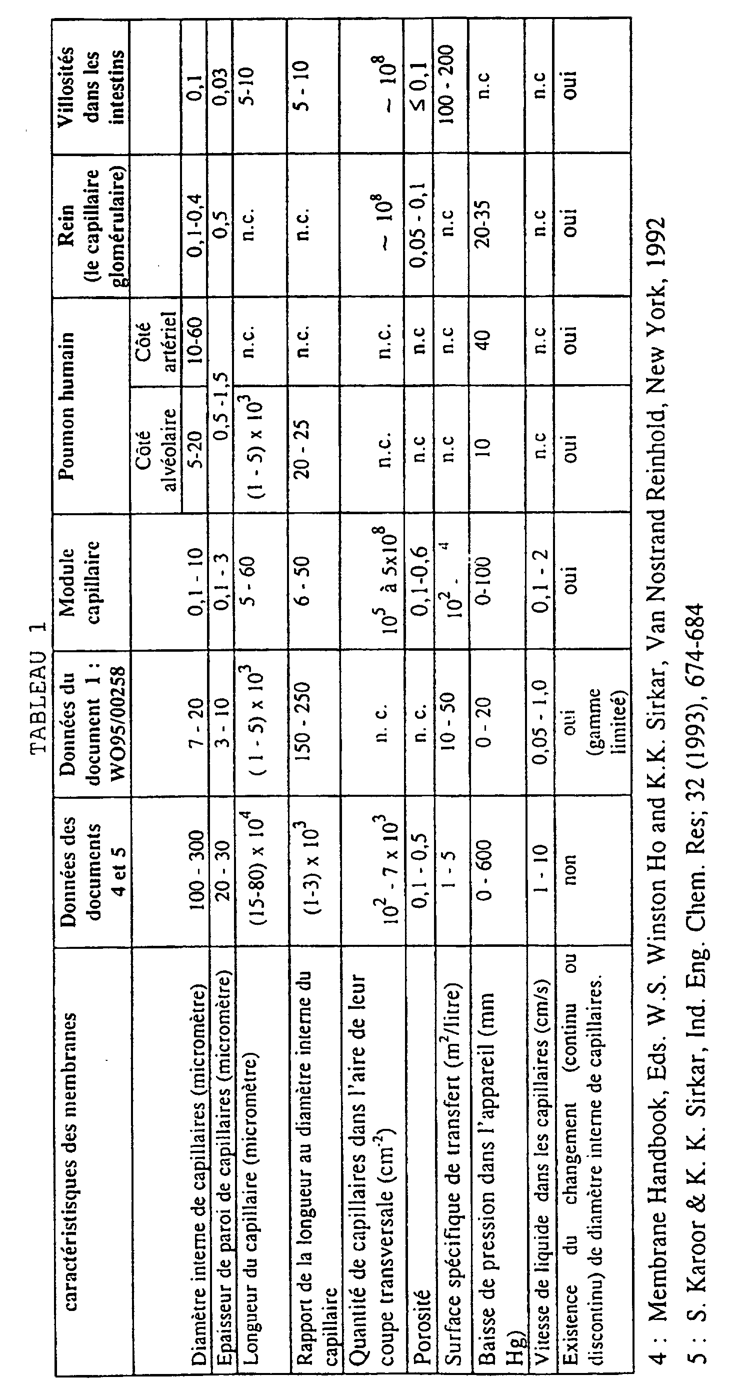

### Liste des références citées

1 : WO-A-95/00238
2 : US-A-4 959152
3 : US-A-5 104 535
4 : Membrane Handbook, Eds. : W.S. Winston Ho and K. K. Sirkar, Van Nostrand Reinhold, New York, 1992.
5 : S. Karror & K. K. Sirkar, Ind. Eng. Chem. Res. 32 1993), 674-684.

## Revendications

1. Membrane creuse comprenant deux couches-supports (5a, 5b) disposées l'une au-dessus de l'autre en ménageant entre elles un espace et une pluralité de tubes capillaires (3) disposés entre les deux couches-supports et présentant chacun une ouverture au niveau de chacune des deux couches-supports de façon à former des canaux capillaires d'écoulement d'un premier fluide, l'espace entre les tubes capillaires et les deux couches-supports formant une cavité interne (7) de circulation d'un second fluide autour des tubes capillaires, et les deux couches-supports et les tubes capillaires étant constitués d'un polymère organique, ladite membrane comportant de 10⁵ à 5.10⁸ tubes capillaires par cm² de couche-support et présentant une surface spécifique de transfert de 10² à 10⁴ m² par litre de fluide.

2. Membrane creuse selon la revendication 1, dans laquelle le polymère organique est un polymère hétérocyclique ou un polyacétylène.

3. Membrane creuse selon la revendication 2, dans laquelle le polymère hétérocyclique est un polypyrrole, une polyaniline ou un polythiophène.

4. Membrane creuse selon l'une quelconque des revendications 1 à 3, dans laquelle les tubes capillaires ont une longueur de 1 à 1000 pm, un diamètre interne de 0,02 à 50 pm, et une épaisseur de paroi de 0,01 à 10 µm.

5. Membrane creuse selon l'une quelconque des revendications 1 à 4, dans laquelle les tubes capillaires (3) sont disposés sensiblement perpendiculairement aux deux couches-supports (5a, 5b) ou selon des directions formant un angle d'au plus 45° avec la perpendiculaire aux deux couches-supports.

6. Membrane creuse selon l'une quelconque des revendications 1 à 5, dans laquelle les tubes capillaires ont une longueur de 5 à 60 µm, un diamètre interne de 0,1 à 10 µm et une épaisseur de paroi de 0,1 à 3 µm.

7. Procédé de fabrication d'une membrane creuse selon l'une quelconque des revendications 1 à 6, comprenant les étapes suivantes :
a) former sur les surfaces externes et dans les pores d'une membrane-matrice (1) comportant des pores rectilignes ouverts (3) disposés entre ses deux surfaces externes, un revêtement de polymère organique (5) par polymérisation in situ d'un monomère précurseur du polymère, et
b) éliminer ensuite le matériau formant la membrane-matrice par destruction dans un réactif sélectif qui n'affecte pas le polymère pour former la cavité interne de ladite membrane creuse.

8. Procédé selon la revendication 7, dans lequel la membrane-matrice est en matériau polymère ou en matériau inorganique et dans lequel les pores rectilignes de la membrane matrice ont été créés par irradiation au moyen d'un faisceaux d'ions lourds, suivie par une dissolution de la matière dans les traces formées par les ions et/ou autour d'elles.

9. Procédé selon la revendication 8, dans lequel le matériau polymère est choisi parmi les polycarbonates, le polytéréphtalate d'éthylène, les polyimides, le polyfluorure de vinylidène, et le réactif est choisi parmi les bases et les acides inorganiques.

10. Procédé selon la revendication 8, dans lequel le matériau inorganique est l'oxyde d'aluminium et le réactif est choisi parmi les bases et les acides inorganiques, ou le matériau inorganique est le mica et le réactif est l'acide fluorhydrique.

11. Procédé selon la revendication 7, dans lequel on réalise la polymérisation in situ du monomère précurseur par oxydation chimique ou électrochimique dudit monomère.

12. Procédé selon la revendication 11, dans lequel la polymérisation par oxydation chimique est effectuée en mettant en contact une face de la membrane-matrice avec une solution dudit monomère et l'autre face de la membrane-matrice avec une solution d'un agent oxydant.

13. Procédé selon l'une quelconque des revendications 7, 11 et 12, dans lequel afin d'obtenir différentes tailles de pores dans les parois des tubes capillaires, différents taux de mouillabilité desdites parois par des solutions aqueuses ou par des solvants organiques, et/ou des propriétés différentes d'électroconductivité, de solidité, de porosité et/ou de flexibilité, on soumet le revêtement de polymère organique, pendant ou après la polymérisation, à un traitement par
a) un réactif choisi parmi les acides de Lewis, en particulir les acides alkyl, aryl ou alkylarylsufoniques ou parmi les sels desdits acides, ou
b) un réactif choisi parmi les hydroxydes ou carbonates de métaux alcalins.

14. Module de traitement de fluide comprenant au moins une membrane creuse selon l'une quelconque des revendications 1 à 6, disposée dans une enceinte étanche de façon à ménager entre deux membranes creuses adjacentes (11) et entre chaque membrane creuse (11) et une paroi adjacente (17) de l'enceinte des espaces de circulation (13) d'un premier fluide en communication uniquement avec l'intérieur des tubes capillaires de la (des) membrane(s) creuse(s), des moyens (25, 27) pour mettre en circulation ledit premier fluide dans les tubes capillaires des membranes creuses en l'introduisant dans l'un desdits espaces de circulation et en le recueillant dans un autre desdits espaces de circulation, et des moyens (29, 31) pour mettre en circulation au moins un second fluide dans la (les) cavité(s) interne(s) de la (des) membrane(s) creuse(s) (11).

15. Module selon la revendication 14, dans lequel le (les) espace(s) de circulation (13) dudit premier fluide sont remplis d'un garnissage permettant d'engendrer des turbulences dans le premier fluide.

16. Module selon la revendication 15, dans lequel le garnissage est formé d'une matière poreuse dont les pores ont des dimensions plus grandes que le diamètre des tubes capillaires.

17. Module selon la revendication 16, dans lequel le rapport de la dimension des pores de la matière poreuses au diamètre des tubes capillaires est de 5 à 200.

18. Module selon l'une quelconque des revendications 16 et 17, dans lequel les pores de la matière poreuse sont tapissés d'un composé choisi parmi les catalyseurs, les enzymes et les sorbants insolubles dans ledit premier fluide, le rapport de la dimension de pore de la matière poreuse au diamètre interne des tubes capillaires étant de 5 à 50.

19. Module selon l'une quelconque des revendications 14 à 18, comprenant :
- un empilement de n membranes creuses (11) et (n + 1) plaques (13) de matière poreuse alternées avec les membranes creuses de façon que chaque membrane creuse soit disposée entre deux plaques de matière poreuse, ces plaques formant les espaces de circulation du premier fluide,
- des moyens (25, 27) pour introduire le premier fluide sur la face inférieure ou supérieure de l'empilement et le récupérer sur la face opposée de cet empilement,
- une chambre d'introduction (19) du second fluide disposée sur une face latérale de l'empilement et en communication avec les cavités internes des membranes creuses (11), et
- une chambre de réception (21) du second fluide disposée sur la face latérale opposée de l'empilement et en communication avec les cavités internes desdites membranes creuses (11).

20. Module selon l'une quelconque des revendications 14 à 18, comprenant :
- un empilement de n membranes creuses (11) et de (n+1) plaques (13) de matière poreuse alternées avec les membranes creuses de façon que chaque membrane creuse soit disposée entre deux plaques de matière poreuse, ces plaques formant les espaces de circulation du premier fluide, l'empilement comprenant une première série de membranes creuses de numéro impair (11₁) et une seconde série de membranes creuses de numéro pair (11₂) disposées entre les membranes de numéro impair,
- des moyens (59, 61) pour introduire le premier fluide sur la face inférieure ou supérieure de l'empilement et le récupérer sur la face opposée de cet empilement,
- une chambre d'introduction (51) d'un second fluide disposée sur une première face latérale de l'empilement et en communication avec les cavités internes des membranes creuses (11₁) de la première série,
- une chambre de réception (53) du second fluide disposée sur la face latérale opposée à ladite première face et en communication avec les cavités internes des membranes creuses (11₁) de la première série,
- une chambre d'introduction (55) d'un troisième fluide disposée sur la face latérale, dite seconde face latérale, contiguë à ladite première face latérale en communication avec les cavités internes des membranes creuses de la seconde série (11₂), et
- une chambre de réception (57) du troisième fluide disposée sur la face latérale opposée à ladite seconde face et en communication avec les cavités internes des membranes creuses (11₂) de la seconde série.

21. Module selon l'une quelconque des revendications 14 à 18, comprenant :
- un empilement de n membranes creuses (11) et de (n+1) plaques (13) de matière poreuse alternées avec les membranes creuses de façon que chaque membrane creuse soit disposée entre deux plaques de matière poreuse, ces plaques formant les espaces de circulation du premier fluide, l'empilement comprenant une première série de membranes creuses de numéro impair (11₁) et une seconde série de membranes creuses de numéro pair (11₂) disposées entre les membranes de numéro impair,
- des moyens (59, 61) pour introduire le premier fluide sur la face inférieure ou supérieure de l'empilement et le récupérer sur la face opposée de cet empilement,
- une chambre d'introduction (71) d'un second fluide disposée sur une première face latérale de l'empilement et en communication avec les cavités internes des membranes creuses (11₁) de la première série,
- une chambre de réception (73) du second fluide disposée sur une face latérale de l'empilement, dite seconde face, contiguë à ladite première face et en communication avec les cavités internes des membranes creuses (11₁) de la première série,
- une chambre d'introduction (75) d'un troisième fluide disposé sur une autre face latérale de l'empilement, dite troisième face, et en communication avec les cavités internes des membranes creuses (11₂) de la seconde série, et
- une chambre de réception (77) du troisième fluide disposée sur la dernière face latérale de l'empilement, dite quatrième face latérale, ladite chambre étant en communication avec les cavités internes des membranes creuses (11₂) de la seconde série.

22. Module selon l'une quelconque des revendications 19 à 21, dans lequel l'empilement des disposé entre deux grilles rigides (15) dont les ouvertures sont au moins égales ou plus importantes que la dimension de pore des plaques de matière poreuse.

23. Module selon l'une quelconque des revendications 19 à 22, dans lequel le diamètre, la longueur et/ou la quantité de tubes capillaires des membranes creuses de l'empilement sont différents dans au moins une membrane creuse de l'empilement.

24. Module selon la revendication 23, dans lequel le diamètre des tubes capillaires diminue d'une membrane creuse à l'autre dans le sens de l'écoulement du premier fluide, et la densité de tubes capillaires augmente d'une membrane creuse à l'autre dans le sens d'écoulement du premier fluide.

25. Procédé de fabrication d'un module de traitement de fluide selon l'une quelconque des revendications 14 à 24, comprenant les étapes suivantes :
1) préparer au moins une membrane composite (6) en formant sur les surfaces externes et dans les pores d'une membrane-matrice (1) comportant des pores rectilignes ouverts disposés entre ses deux surfaces externes, un revêtement (5) de polymère organique par polymérisation in situ d'un monomère précurseur du polymère,
2) former à partir de la (des) membranes-composites (6) et de plaques (13) de matière poreuse un empilement dans lequel chaque membrane-composite (6) est disposée entre deux plaques (13) de matière poreuse,
3) former des joints étanches (23) entre les membranes composites et les plaques poreuses sur les faces latérales de l'empilement,
4) réaliser des ouvertures (24) dans le joint étanche seulement au niveau des membranes composites, et pour chaque membrane composite seulement sur deux faces latérales différentes de l'empilement,
5) introduire par ces ouvertures un réactif capable de détruire le matériau formant la membrane-matrice des membranes-composites sans affecter le polymère recouvrant les surfaces et les pores de la membrane-matrice, pour obtenir un empilement de membranes creuses (11) et de plaques (13) de matière poreuse dans lequel les cavités internes (7) des membranes creuses sont accessibles sur deux faces latérales de l'empilement.

26. Procédé selon la revendication 25, dans lequel afin d'obtenir différentes tailles de pores dans les parois des tubes capillaires, différents taux de mouillabilité desdites parois par des solutions aqueuses ou par des solvants organiques, et/ou des propriétés différentes d'électroconductivité, de solidité, de porosité et/ou de flexibilité, on soumet le revêtement de polymère organique, pendant ou après la polymérisation, à un traitement par
a) un réactif choisi parmi les acides de Lewis, en particulier les acides alkyl, aryl ou alkylarylsufoniques ou parmi les sels desdits acides, ou
b) un réactif choisi parmi les hydroxydes ou carbonates de métaux alcalins.

27. Procédé selon la revendication 25 ou 26, dans lequel l'étape 3) est réalisée en faisant pénétrer de la colle dans les plaques poreuses et les membranes-composites sur les faces latérales de l'empilement.

28. Procédé selon la revendication 27, comprenant en outre une étape de traitement des plaques de matière poreuse, pour faciliter la pénétration de la colle, avant de réaliser l'étape 3).

## Patentansprüche

1. Hohlmembran mit zwei Trägerschichten (5a, 5b), die eine über der anderen, einen Raum zwischen ihnen sowie eine Vielzahl von Kapillarenröhren (3) zwischen den beiden Trägerschichten umfassend, jede versehen mit einer Öffnung in jeder der beiden Trägerschichten, so dass sie Kapillarkanäle für das Fließen eines ersten Fluids bilden, wobei der Raum zwischen den Kapillarröhren und den beiden Trägerschichten einen Innenhohlraum (7) bildet, in dem ein zweites Fluid um die Kapillarröhren herum zirkuliert, und die beiden Trägerschichten und die Kapillarröhren durch ein organisches Polymer gebildet werden, wobei die genannte Membran 10⁵ bis 5.10⁸ Kapillarröhren pro cm² Trägerschicht enthält und eine spezifische Transferoberfläche von 10² bis 10⁴ m² pro Liter Fluid aufweist.

2. Hohlmembran nach Anspruch 1, bei der das organische Polymer ein heterozyklisches Polymer oder ein Polyacetylen ist.

3. Hohlmembran nach Anspruch 2, bei der das heterozyklische Polymer ein Polypyrrol, ein Polyanilin oder ein Polythiophen ist.

4. Hohlmembran nach einem der Ansprüche 1 bis 3, bei der die Kapillarröhren eine Länge von 1 bis 1000 µm, einen Innendurchmesser von 0,02 bis 50 µm und eine Wanddicke von 0,01 bis 10 µm haben.

5. Hohlmembran nach einem der Ansprüche 1 bis 4, bei dem die Kapillarröhren (3) im Wesentlichen senkrecht zu den beiden Trägerschichten (5a, 5b) sind oder Richtungen aufweisen, die einen Winkel von höchstens 45° mit der Senkrechten zu den beiden Trägerschichten bilden.

6. Hohlmembran nach einem der Ansprüche 1 bis 5, bei dem die Kapillarröhren eine Länge von 5 bis 60 µm, einen Innendurchmesser von 0,1 bis 10 µm und eine Wanddicke von 0,1 bis 3 µm haben.

7. Herstellungsverfahren einer Hohlmembran nach einem der Ansprüche 1 bis 6, die folgenden Schritte umfassend:
a) Bilden eines Überzugs aus organischem Polymer (5) durch In-situ-Polymerisation eines Vorläufer Monomers des Polymers auf den Außenoberflächen und in den Poren einer Membran-Matrix (1) mit offenen geradlinigen Poren (3) zwischen diesen beiden Außenoberflächen, und
b) anschließendes Eliminieren des die Membran-Matrix (1) bildenden Materials durch Zerstörung in einem selektiven Reagenz, welches das Polymer nicht angreift, um den Innenhohlraum der genannten Hohlmembran zu bilden.

8. Verfahren nach Anspruch 7, bei dem die Membran-Matrix aus einem polymeren Material oder einem anorganischen Material ist und bei dem die geradlinigen Poren der Membran-Matrix durch Bestrahlung mit einem Schwerionenstrahl erzeugt worden sind, gefolgt von einer Auflösung des Materials in den durch die Ionen gebildeten Spuren und/oder um diese herum.

9. Verfahren nach Anspruch 8, bei dem das polymere Material unter den Polycarbonaten, den Polyethylenterephtalaten, den Polyimiden, den Vinyliden-Polyfluoriden ausgewählt wird und das Reagenz unter den anorganischen Basen und Säuren.

10. Verfahren nach Anspruch 8, bei dem das anorganische Material Aluminiumoxid ist und das Reagenz unter den anorganischen Basen und Säuren ausgewählt wird.

11. Verfahren nach Anspruch 7, bei dem man die In-situ-Polymerisation des Vorläufer-Monomers durch chemische oder elektrochemische Oxidation des genannten Monomers realisiert.

12. Verfahren nach Anspruch 11, bei dem die Polymerisation durch chemische Oxidation erfolgt, indem man eine Seite bzw. Fläche der Membran-Matrix mit einer Lösung des genannten Monomers in Kontakt bringt und die andere Seite bzw. Fläche der Membran-Matrix mit einer Lösung eines oxidierenden Reagenz.

13. Verfahren nach einem der Ansprüche 7, 11 und 12, bei dem man zur Erlangung unterschiedlicher Porengrößen in den Wänden der Kapillarröhren, unterschiedlicher Benetzbarkeitsgrade der genannten Wände durch wässrige Lösungen oder durch organische Lösungsmittel und/oder unterschiedlicher Eigenschaften der elektrischen Leitfähigkeit, der Festigkeit, der Porosität und/oder der Flexibilität den Überzug aus organischem Polymer während oder nach der Polymerisation behandelt mit
a) einem Reagenz, ausgewählt unter den Säuren der lewischen Art, insbesondere den Alkylsäuren, Arylsäuren oder Alkyl-Aryl-Sulfosäuren, oder unter den Salzen der genannten Säuren, oder
b) einem Reagenz, ausgewählt unter den Hydroxiden oder Carbonaten von alkalischen Metallen.

14. Fluidbehandlungsmodul, wenigstens eine Hohlmembran nach einem der Ansprüche 1 bis 6 umfassend, so in einem dichten Gehäuse angeordnet, dass zwischen zwei benachbarten Hohlmembranen (11) und zwischen jeder Hohlmembran (11) und einer benachbarten Wand (17) des Gehäuses Zirkulationsräume (13) für ein erstes Fluid vorhanden sind, die nur mit dem Innern der Kapillarröhren der Hohlmembran(en) kommunizieren, und Einrichtungen (25, 27) zur Erzeugung der Zirkulation des genannten ersten Fluids in den Kapillarröhren der Hohlmembranen, indem dieses erste Fluid in einen der genannten Zirkulationsräume eingespeist wird und von einem anderen dieser Zirkulationsräume aufgenommen wird, sowie Einrichtungen (29, 31) zur Erzeugung der Zirkulation wenigstens eines zweiten Fluids in dem (den) Innenhohlraum (-räumen) der Hohlmembran(en) (11).

15. Modul nach Anspruch 14, bei dem der (die) Zirkulationsraum (-räume) des genannten ersten Fluids eine Ausfütterung aufweist (aufweisen), die in dem ersten Fluid Turbulenzen erzeugt.

16. Modul nach Anspruch 15, bei dem die Ausfütterung durch ein poröses Material gebildet wird, dessen Poren Abmessungen aufweisen, die größer sind als der Durchmesser der Kapillarröhren.

17. Modul nach Anspruch 16, bei dem das Verhältnis aus der Porenabmessung des porösen Materials und dem Durchmesser der Kapillarröhren 5 bis 200 beträgt.

18. Modul nach einem der Ansprüche 16 und 17, bei dem die Poren des porösen Materials mit einer Verbindung überzogen bzw. verkleidet werden, die ausgewählt wird unter den Katalysatoren, den Enzymen und den in dem genannten ersten Fluid unlöslichen Sorptionsmitteln, wobei das Verhältnis aus der Porenabmessung des porösen Materials und dem Durchmesser der Kapillarröhren 5 bis 50 beträgt.

19. Modul nach einem der Ansprüche 14 bis 18, umfassend:
- einen Stapel aus n Hohlmembranen (11) und (n + 1) Platten aus porösem Material (13) in abwechselnder Reihenfolge, so dass jede Hohlmembran sich zwischen zwei Platten aus porösem Material befindet, wobei diese Platten die Zirkulationsräume des ersten Fluids bilden,
- Einrichtungen (25, 27) zur Einspeisung des ersten Fluids auf der Unterseite oder Oberseite des Stapels und zu seiner Rückgewinnung auf der jeweils entgegengesetzten Seite dieses Stapels,
- eine Einspeisungskammer (19) des zweiten Fluids, angeordnet auf einer Seite des Stapels und in Kommunikation mit den Innenhohlräumen der Hohlmembranen (11), und
- eine Aufnahmekammer (21) des zweiten Fluids, angeordnet auf der entgegengesetzten Seite des Stapels und in Kommunikation mit den Innenhohlräumen der genannten Hohlmembranen (11).

20. Modul nach einem der Ansprüche 14 bis 18, umfassend:
- einen Stapel aus n Hohlmembranen (11) und (n + 1) Platten (13) aus porösem Material in abwechselnder Reihenfolge, so dass jede Hohlmembran sich zwischen zwei Platten aus porösem Stoff befindet, wobei diese Platten die Zirkulationsräume des ersten Fluids bilden und der Stapel eine erste Serie von Hohlmembranen mit ungerader Nummer (11₁) und eine zweite Serie von Hohlmembranen mit gerader Nummer (11₂) umfasst, die sich zwischen den Membranen mit ungerader Nummer befinden,
- Einrichtungen (59, 61) zur Einspeisung des ersten Fluids auf der Unterseite oder Oberseite des Stapels und zu seiner Rückgewinnung auf der jeweils entgegengesetzten Seite dieses Stapels,
- eine Einspeisungskammer (51) eines zweiten Fluids, angeordnet auf einer Seite des Stapels und in Kommunikation mit den Innenhohlräumen der Hohlmembranen (11₁) der ersten Serie,
- eine Aufnahmekammer (53) des zweiten Fluids, angeordnet auf der entgegengesetzten Seite des Stapels und in Kommunikation mit den Innenhohlräumen der Hohlmembranen (11₁) der ersten Serie,
- eine Einspeisungskammer (55) eines dritten Fluids, angeordnet auf der an die erste Seite angrenzenden Seite des Stapels, zweite Seite genannt, in Kommunikation mit den Innenhohlräumen der Hohlmembranen (11₂) der zweiten Serie,
- eine Aufnahmekammer (57) des dritten Fluids, angeordnet auf der der genannten zweiten Seite entgegengesetzten Seite und in Kommunikation mit den Innenhohlräumen der Hohlmembranen (11₂) der zweiten Serie.

21. Modul nach einem der Ansprüche 14 bis 18, umfassend:
- einen Stapel aus n Hohlmembranen (11) und (n + 1) Platten aus porösem Material (13) in abwechselnder Reihenfolge, so dass jede Hohlmembran sich zwischen zwei Platten aus porösem Material befindet, wobei diese Platten die Zirkulationsräume des ersten Fluids bilden und der Stapel eine erste Serie von Hohlmembranen mit ungerader Nummer (11₁) und eine zweite Serie von Hohlmembranen mit gerader Nummer (11₂) umfasst, die sich zwischen den Membranen mit ungerader Nummer befinden,
- Einrichtungen (59, 61) zur Einspeisung des ersten Fluids auf der Unterseite oder Oberseite des Stapels und zu seiner Rückgewinnung auf der jeweils entgegengesetzten Seite dieses Stapels,
- eine Einspeisungskammer (71) eines zweiten Fluids, angeordnet auf einer Seite des Stapels und in Kommunikation mit den Innenhohlräumen der Hohlmembranen (11₁) der ersten Serie,
- eine Aufnahmekammer (73) des zweiten Fluids, angeordnet auf der entgegengesetzten Seite des Stapels und in Kommunikation mit den Innenhohlräumen der Hohlmembranen (11₁) der ersten Serie,
- eine Einspeisungskammer (75) eines dritten Fluids, angeordnet auf einer weiteren Seite des Stapels, dritte Seite genannt und in Kommunikation mit den Innenhohlräumen der Hohlmembranen (11₂) der zweiten Serie, und
- eine Aufnahmekammer (77) des dritten Fluids, angeordnet auf der letzten Seite des Stapels, vierte Seite genannt, wobei diese Kammer mit den Innenhohlräumen der Hohlmembranen (11₂) der zweiten Serie kommuniziert.

22. Modul nach einem der Ansprüche 19 bis 21, bei dem der Stapel zwischen zwei steifen Gittern (15) angeordnet ist, deren Öffnungen wenigstens gleich groß sind wie die Porenabmessung der Platten aus porösem Material oder größer.

23. Modul nach einem der Ansprüche 19 bis 22, bei dem der Durchmesser, die Länge und/oder die Menge der Kapillarröhren der Hohlmembranen des Stapels bei wenigstens einer Hohlmembran des Stapels unterschiedlich sind.

24. Modul nach Anspruch 23, bei dem der Durchmesser der Kapillarröhren in Strömungsrichtung des ersten Fluids von einer Hohlmembran zur andem abnimmt und die Dichte der Kapillarröhren in Strömungsrichtung des ersten Fluids von einer Hohlmembran zu andem zunimmt.

25. Verfahren zur Herstellung eines Fluidbehandlungsmoduls nach einem der Ansprüche 14 bis 24, die folgenden Schritte umfassend:
1) das Herstellen von wenigstens einer Verbundmembran (6), indem man auf den Außenoberflächen und in den Poren einer Membran-Matrix (1) mit offenen geradlinigen Poren zwischen ihren beiden Außenoberflächen durch In-situ-Polymerisation eines Vorläufer-Monomers des Polymers einen Überzug (5) aus organischem Polymer erzeugt,
2) das Bilden eines Stapels aus Verbundmembran(en) und Platten aus porösem Material (13), wobei in diesem Stapel sich jede Verbundmembran (6) zwischen zwei Platten (13) aus porösem Material befindet,
3) das Ausbilden der Dichtungen (23) zwischen den Verbundmembranen und den porösen Platten auf den Seiten des Stapels,
4) das Herstellen von Öffnungen (24) in der Dichtung nur in Höhe der Verbundmembranen, und für jede Verbundmembran nur auf zwei verschiedenen Seiten des Stapels,
5) das Einspeisen eines Reagenz durch diese Öffnungen, das fähig ist, das die Membran-Matrix der Verbundmembranen bildende Material zu zerstören, ohne das Polymer anzugreifen, mit dem die Oberflächen und die Poren der Membran-Matrix überzogen sind, um einen Stapel aus Hohlmembranen (11) und Platten aus porösem Material (13) zu erhalten, in dem die Innenhohlräume (7) der Hohlmembranen von zwei Seiten des Stapels zugänglich sind.

26. Verfahren nach Anspruch 25, bei dem man zur Erlangung unterschiedlicher Porengrößen in den Wänden der Kapillarröhren, unterschiedlicher Benetzbarkeitsgrade der genannten Wände durch wässrige Lösungen oder durch organische Lösungsmittel und/oder unterschiedlicher Eigenschaften der elektrischen Leitfähigkeit, der Festigkeit, der Porosität und/oder der Flexibilität den Überzug aus organischem Polymer während oder nach der Polymerisation behandelt mit
a) einem Reagenz, ausgewählt unter den Säuren der lewischen Art, insbesondere den Alkylsäuren, Arylsäuren oder Alkyl-Aryl-Sulfosäuren, oder unter den Salzen der genannten Säuren, oder
b) einem Reagenz, ausgewählt unter den Hydroxiden oder Carbonaten von alkalischen Metallen.

27. Verfahren nach Anspruch 25 oder 26, bei dem der Schritt 3 durchgeführt wird, indem man auf den Seiten des Stapels Klebstoff in die porösen Platten und die Verbundmembranen eindringen lässt.

28. Verfahren nach Anspruch 27, das außerdem einen Schritt zur Behandlung der Platten aus porösem Material umfasst, um das Eindringen des Klebstoffs zu erleichtern, vor Durchführung des Schritts 3).

## Claims

1. Hollow membrane comprising two support layers (5a, 5b) placed one above the other leaving between them a space and a plurality of capillary tubes (3) positioned between the two support layers and having in each case an opening level with each of the two support layers so as to form capillary channels for the flow of a first fluid, the space between the capillary tubes and the two support layers forming an internal cavity (7) for the circulation of a second fluid around the capillary tubes, and the two support layers and capillary tubes are made from an organic polymer, said membrane having 105 to 5.10⁸ capillary tubes per cm² of support layer and having a specific transfer surface of 10² to 10⁴m² per litre of fluid.

2. Hollow membrane according to claim 1, wherein the organic polymer is a heterocyclic polymer or a polyacetylene.

3. Hollow membrane according to claim 2, wherein the heterocyclic polymer is a polypyrrole, a polyaniline or a polythiophene.

4. Hollow membrane according to any one of claims 1 to 3, wherein the capillary tubes have a length of from 1 to 1000 µm, an internal diameter of from 0.02 to 50 µm, and a wall thickness of from 0.01 to 10 µm.

5. Hollow membrane according to any one of claims 1 to 4, wherein the capillary tubes (3) are arranged substantially perpendicular to the two support layers (5a, 5b) or along directions that form an angle at the most 45° with the perpendicular to the two support layers.

6. Hollow membrane according to any one of the claims 1 to 5, wherein the capillary tubes have a length of 5 to 60 µm, an internal diameter of 0.1 to 10 µm and a wall thickness of 0.1 to 3 µm.

7. Method of manufacturing a hollow membrane according to any one of claims 1 to 6 comprising the following steps:
a) forming on the external surfaces and in the pores of a membrane matrix (1), that includes open rectilinear pores (3) arranged between its two external surfaces, a coating of organic polymer (5) by in situ polymerization of a precursor monomer of the polymer, and
b) then removing the material forming the membrane matrix by destruction in a selective reactant which does not affect the polymer in order to form the internal cavity of said hollow membrane.

8. Method according to claim 7, wherein the membrane matrix is made of a polymeric material or an inorganic material and in which the rectilinear pores of the membrane matrix have been created by irradiation using a beam of heavy ions, followed by dissolution of the material in the tracks formed by the ions and/or around them.

9. Method according to claim 8, wherein the polymeric material is chosen from among polycarbonates, polyethylene terephthalate, polyimides or polyvinylidene fluoride and the reactant is chosen from among the inorganic bases and acids.

10. Method according to claim 8, wherein the inorganic material is aluminium oxide and the reactant is chosen from among the inorganic bases and acids or the inorganic material is mica and the reactant is hydrofluoric acid.

11. Method according to claim 7, wherein the polymerization is carried out in situ from the monomer precursor by chemical or electrochemical oxidation of said monomer.

12. Method according to claim 11, wherein the polymerization by chemical oxidation is carried out by bringing one face of the membrane matrix into contact with a solution of said monomer and the other face of the membrane matrix with a solution of an oxidizing agent.

13. Method according to any one of claims 7, 11 and 12, wherein so as to obtain different pore sizes in the walls of the capillary tubes, different degrees of wettability of said walls by aqueous solutions or by organic solvents, and/or different electro-conductivity properties, rigidity, porosity and/or flexibility, the organic polymer coating is subjected, during or after polymerization to treatment by
a) a reactant chosen from among the Lewis acids, particularly the alkyl, aryl or alkylaryl sulphonic acids or from among the salts of said acids, or
b) a reactant chosen from among the hydroxides or carbonates of alkali metals.

14. Fluid treatment module comprising at least one hollow membrane according to any one of claims 1 to 6, arranged within a sealed enclosure in such a way as to provide, between two adjacent hollow membranes (11) and between each hollow membrane (11) and an adjacent side wall (17) of the enclosure, spaces (13) for the circulation of a first fluid uniquely in communication with the inside of the capillary tubes of the hollow membrane or membranes, means (25, 27) of circulating said first fluid in the capillary tubes of the hollow membranes by introducing it into one of said circulation spaces and by collecting it in another of said circulation spaces and means (29, 31) of circulating at least one second fluid in the internal cavity or cavities of the hollow membrane or membranes (11).

15. Module according to claim 14, wherein the space or spaces (13) for circulation of said first fluid are filled with a lining that allows turbulence to be generated in the first fluid.

16. Module according to claim 15, in which the lining is formed from a porous material, the pores of which have dimensions greater than the diameter of the capillary tubes.

17. Module according to claim 16, wherein the ratio of the dimension of the pores of the porous material to the diameter of the capillary tubes is from 5 to 200.

18. Module according to any one of claims 16 and 17, wherein the pores of the porous material are lined with a component chosen from catalysts, enzymes and sorbents that are insoluble in said first fluid, the ratio of the pore dimension of the porous material to the internal diameter of the capillary tubes remains within the range of from 5 to 50.

19. Module according to any one of claims 14 to 18, comprising:
- a stack of n hollow membranes (11) and (n+1) panels (13) of porous material alternating with the hollow membranes in such a way that each hollow membrane is positioned between two panels of porous material, these panels forming spaces for the circulation of the first fluid,
- means (25, 27) of introducing the first fluid onto the lower or upper face of the stack and of recovering it at the opposite face of this stack,
- a chamber (19) for the introduction of the second fluid, arranged on a lateral face of the stack and in communication with the internal cavities of the hollow membranes (11), and
- a chamber (21) for receiving the second fluid arranged on the opposite lateral face of the stack and in communication with the internal cavities of said hollow membranes (11).

20. Module according to any one of claims 14 to 18, comprising:
- a stack of n hollow membranes (11) and (n+1) panels (13) of porous material alternating with the hollow membranes in such a way that each hollow membrane is positioned in a stack between two panels of porous material, these panels forming spaces for the circulation of the first fluid, the stack comprising a first series of hollow membranes with an odd number (11₁) and a second series of hollow membranes with an even number (11₂) arranged between the membranes with an odd number,
- means (59, 61) of introducing the first fluid onto the lower or upper face of the stack and of recovering it on the opposite face of this stack,
- a chamber (51) for the introduction of the second fluid, arranged on a first lateral face of the stack and in communication with the internal cavities of the hollow membranes (11₁) of the first series,
- a chamber 953) for receiving the second fluid arranged on the lateral face opposite to said first face and in communication with the internal cavities of said hollow membranes (11₁) of the first series,
- a chamber (55) for the introduction of a third fluid, arranged on the lateral face, called the second lateral face, contiguous with said first lateral face and in communication with the internal cavities of the hollow membranes (11₂) of the second series, and
- a chamber (57) for receiving the third fluid arranged on the lateral face opposite to said second face and in communication with the internal cavities of the hollow membranes (11₂) of the second series.

21. Module according to any one of claims 14 to 18, comprising:
- a stack of n hollow membranes (11) and (n+1) panels (13) of porous material alternating with the hollow membranes in such a way that each hollow membrane is positioned between two panels of porous material, these panels forming spaces for the circulation of the first fluid, the stack comprising a first series of hollow membranes with an odd number (11₁) and a second series of hollow membranes with an even number (11₂) arranged between the membranes with an odd number,
- means (59, 61) of introducing the first fluid onto the lower or upper face of the stack and of recovering it on the opposite face of this stack,
- a chamber (71) for the introduction of a second fluid, arranged on a first lateral face of the stack and in communication with the internal cavities of the hollow membranes (11₁) of the first series,
- a chamber (73) for receiving the second fluid arranged on the lateral face of the stack, called the second face and contiguous with said first face and in communication with the internal cavities of said hollow membranes (11₁) of the first series,
- a chamber (75) for the introduction of a third fluid, arranged on another lateral face of the stack, called the third face, and in communication with the internal cavities of the hollow membranes (11₂) of the second series, and
- a chamber (77) for receiving the third fluid arranged on the last lateral face of the stack, called the fourth lateral face, said chamber being in communication with the internal cavities of the hollow membranes (11₂) of the second series.

22. Module according to any one of claims 19 to 21, wherein the stack is arranged between two rigid grids (15), the openings in which are at least equal to or greater than the pore dimension of the panels of porous material.

23. Module according to any one of claims 19 to 22, wherein the diameter, the length and/or the quantity of capillary tubes of the hollow membranes in the stack are different in at least one hollow membrane of the stack.

24. Module according to claim 23, wherein the diameter of the capillary tubes reduces from one hollow membrane to the other in the direction of flow of the first fluid, and the density of capillary tubes increases from one hollow membrane to the other in the direction of flow of the first fluid.

25. Method of manufacturing a fluid treatment module according to any one of claims 14 to 24 comprising the following steps:
1) preparing at least one composite membrane (6) by forming, on the external surfaces and in the pores of a membrane matrix (1) comprising rectilinear open pores arranged between its two external surfaces, a coating (5) of organic polymer by in situ polymerization of a monomer precursor of the polymer,
2) forming, from the composite membrane or membranes (6) and panels (13) of porous material, a stack in which each composite membrane (6) is arranged between two panels (13) of porous material,
3) forming sealed joints (23) between the composite membranes and the porous panels on the lateral faces of the stack,
4) making openings (24) in the sealed joint only at the level of the composite membranes, and for each composite membrane only on two different lateral faces of the stack,
5) introducing through these openings a reactant capable of destroying the material forming the membrane matrix of the composite membranes without affecting the polymer covering the surfaces and the pores of the membrane matrix, in order to obtain a stack of hollow membranes (11) and panels (13) of porous material in which the internal cavities (7) of the hollow membranes are accessible on two lateral faces of the stack.

26. Method according to claim 25, wherein so as to obtain different pore sizes in the walls of the capillary tubes, different degrees of wettability of said walls by the aqueous solutions or by the organic solvents, and/or different electro-conductivity properties, rigidity, porosity and/or flexibility, the coating of organic polymer is subjected, during or after polymerization to treatment by
a) a reactant chosen from among the Lewis acids, particularly the alkyl, aryl or alkylaryl sulphonic acids or from among the salts of said acids, or
b) a reactant chosen from among the hydroxides or carbonates of alkali metals.

27. Method according to either claim 25 or 26, wherein step 3) is carried out by causing the penetration of the adhesive into the porous panels and the composite membranes on the lateral faces of the stack.

28. Method according to claim 27, comprising, in addition, a step of treating the panels of porous material, in order to facilitate the penetration of the adhesive, before carrying out step 3).
